# EUROPÄISCHE PATENTSCHRIFT

(11) **EP 2 413 102 B1**
(45) Veröffentlichungstag und Bekanntmachung des Hinweises auf die Patenterteilung: **05.06.2013**
(21) Anmeldenummer: 10400036.9
(22) Anmeldetag: 31.07.2010
(51) Int. Cl.: G01C 21/20

(54) **Bestimmen und graphische Darstellung einer Korridorbegrenzung um einen einen Aufenthaltsbereich festlegenden Korridor**
Determining and graphically depicting a corridor border around a corridor defining a sojourn area
Détermination et représentation graphique d'une limitation de corridor autour d'un corridor définissant une zone de séjour

(43) Veröffentlichungstag der Anmeldung: 01.02.2012
(73) Patentinhaber: ATLAS ELEKTRONIK GmbH, 28305 Bremen (DE)
(72) Erfinder: Simon, Detlef, 28199 Bremen (DE)

(56) Entgegenhaltungen:
- US-B1- 7 043 361
- GREINER G ET AL: "EFFICIENT CLIPPING OF ARBITRARY POLYGONS", ACM TRANSACTIONS ON GRAPHICS, ACM, US, Bd. 17, Nr. 2, 1. April 1998 (1998-04-01), Seiten 71-83, XP000754614, ISSN: 0730-0301, DOI: DOI:10.1145/274363.274364
- James D.Foley: "Computer graphics - principles and practice", 1. Juli 1995 (1995-07-01), Addison-Wesley, XP002611614, ISBN: 0201848406 Seiten 964-965, * Seite 964, Zeile 21 - Seite 965, Zeile 3 *
- RIVERO M ET AL: "Boolean operations on general planar polygons", COMPUTERS AND GRAPHICS, ELSEVIER, GB, vol. 24, no. 6, 1 December 2000 (2000-12-01), pages 881-896, XP004225284, ISSN: 0097-8493, DOI: 10.1016/S0097-8493(00)00090-X

## Beschreibung

Die Erfindung betrifft ein Verfahren und eine Vorrichtung zum Bestimmen wenigstens einer Korridorbegrenzung, die wenigstens einen Korridor, insbesondere Seeweg begrenzt, wobei der Korridor einen Aufenthaltsbereich für ein Fahrzeug festlegt und bspw. um eine für ein Wasserfahrzeug vorgegebene Wegstrecke herum bestimmt wird. Ferner betrifft die Erfindung ein Computerprogramm für die Durchführung des Verfahrens.

Der Korridor kennzeichnet einen, insbesondere zulässigen, Aufenthaltsbereich, innerhalb dessen Abweichungen von der vorgegebenen Wegstrecke für das Wasserfahrzeug zulässig sind. Darüber hinaus kann der Korridor auch allgemein ein Manövriergebiet für ein Wasserfahrzeug definieren.

Der Korridor oder ein Teil des Korridors wird im Allgemeinen auf einer graphischen Oberfläche angezeigt, die sich bspw. auf einer Führungsstelle des die vorgegebene Wegstrecke zulässig passierenden Wasserfahrzeugs befindet. Die Wegstrecke selbst und/oder der Korridor werden hingegen im Allgemeinen von außen, bspw. von einer Marineführungsstelle, vorgegeben, wo der Korridor ebenfalls graphisch dargestellt werden kann.

Wenn ein Wasserfahrzeug den vorgegebenen Korridor verlässt, wird im Allgemeinen ein Alarmsignal erzeugt, das der Führungsstelle des Wasserfahrzeugs, bspw. einer Brücke, und/oder der Marineführungsstelle zugeführt wird. Die jeweilige Stelle kann dann entscheiden, wie mit der Situation umzugehen ist.

Bei einem bekannten Verfahren zum Bestimmen eines Korridors wird dieser Korridor als ein verschiebbares Rechteck um eine zur jeweiligen Zeit zulässige Soll-Position des Wasserfahrzeugs herum definiert. Dieses Rechteck und damit auch eine Korridorbegrenzung wird zeitlich entlang der Wegstrecke mit einer vorgegebenen konstanten oder variablen Geschwindigkeit verschoben.

Die Wegstrecke ist normalerweise mittels Wegpunkten durch aneinander gereihte, diese Wegpunkte geradlinig verbindende Teilstrecken definiert. An den Wegpunkten kann sich somit die Richtung der Wegstrecke ändern. Bei einer derartigen Änderung der Richtung schwenkt der Soll-Aufenthaltsbereich bzw. das Rechteck ebenfalls herum, so dass bei diesem bekannten Verfahren schlagartig eine Änderung des zulässigen Aufenthaltsbereichs eintritt. Es kann daher vorkommen, dass sich das Wasserfahrzeug vor dem Umschwenken des Aufenthaltsbereichs in einer derart ungünstigen Position innerhalb dieses Aufenthaltsbereichs befindet, dass es nach dem Umschwenken des Aufenthaltsbereichs nicht mehr innerhalb dieses Aufenthaltsbereichs liegt und somit ggf. einen Alarm bzw. Fehlalarm auslöst.

Ein anderes Verfahren zum Bestimmen eines Korridors ist aus US 7,043,361 B1 bekannt. Bei diesem bekannten Verfahren wird der zulässige Aufenthaltsbereich ebenfalls weitgehend mittels Rechtecken definiert, wobei jedoch im Bereich der o.g. Wegpunkte ein zulässiger Aufenthaltsbereich durch zwei Rechtecke und einen Zwischenbereich zwischen diesen definiert wird, der durch einen die Rechtecke verbindenden Bogen begrenzt wird. Dieses andere Verfahren mag zwar gegenüber dem erst genannten Verfahren Fehlalarme aufgrund eines Umklappens zugelassener Aufenthaltsbereiche vermeiden können. Jedoch erfordert dieses bekannte Verfahren einen hohen Rechenaufwand.

Aus Transactions on Graphics, ACM, US, Band 17, Nr. 2, April 1998, Seiten 71 bis 83, ist ein Artikel mit dem Titel "Efficient clipping of arbitrary polygons" von Günther Greiner und Kai Hormann bekannt, in welchem ein Verfahren beschrieben wird, Polygone miteinander zu schneiden und daraus eine Schnittmenge, eine Differenzmenge oder eine Vereinigungsmenge zu bilden. Dabei bedient sich das Verfahren eines Algorithmus zum Detektieren, ob ein Punkt innerhalb oder außerhalb eines Polygons liegt. Für diesen Algorithmus verweist der Artikel auf eine sog. Gerade-Ungerade-Regel bzw. Even-Odd-Rule, die in einer Veröffentlichung mit dem Titel "Computer Graphics - Principles and Practice", 1. Juli 1995, Addison-Wesley, offenbart wird. In dieser Veröffentlichung wird beschrieben, von einem Punkt ausgehend, eine Linie zu ziehen und anhand der Schnittpunkte dieser Linie mit einem Polygon festzustellen, ob die Anzahl der Schnittpunkte gerade oder ungerade ist, und dadurch festzustellen, ob der Punkt innerhalb oder außerhalb des Polygons liegt.

Ferner ist in Computers and Graphics, Elsevier, GB, Bd. 24, Nr. 6, 1. Dezember 2000 (2000-12-01), Seiten 881-896, ein Artikel von Rivero M et al mit dem Titel "Boolean operations on general planar polygons" veröffentlicht, in dem die Vereinigungsmenge zweier Polygone aus der Vereinigungsmenge aller Kanten abzüglich der inneren Kanten beider Polygone ermittelt wird.

Der Erfindung liegt die Aufgabe zugrunde, ein weiteres, robustes und einfach zu implementierendes sowie eine geringe Rechenleistung beanspruchendes Verfahren zum Bestimmen einer einen Korridor, insbesondere für Wasserfahrzeuge begrenzenden Korridorbegrenzung, bereit zu stellen.

Die Erfindung löst diese Aufgabe mit Verfahren nach Anspruch 1 mit einer Vorrichtung nach Anspruch 11, sowie mit einem Computerprogramm nach Anspruch 14.

Insbesondere hat die Erfindung erkannt, dass die Korridorbegrenzung eines den zulässigen Aufenthaltsbereich festlegenden Korridors, der mehrere sich zumindest teilweise überlappende Teilbereiche umfasst, mit geringem Rechenaufwand aus ausgewählten Abschnitten von diese Teilbereiche begrenzenden Teilbereichsbegrenzungen zusammengesetzt werden kann, nämlich aus genau den Abschnitten, die einen Übergang zwischen einem Aufenthaltsbereich und der Umgebung darstellen. Für die Darstellung der Korridorbegrenzung als Umhüllende des Korridors reicht es daher aus, diese Korridorbegrenzung bzw. Umhüllende als Menge von Abschnitten der Teilbereichsbegrenzungen bzw. als Menge von nicht notwendig geschlossenen Teilkurven bzw. Teilflächen anzugeben. Es müssen somit nicht alle Abschnitte der Teilbe-reichsbegrenzungen bzw. nicht die vollständigen Teilbereichsbegrenzungen zur Beschreibung der Korridorbegrenzung herangezogen werden. Zwischenschnitte der einzelnen Teilbereiche miteinander werden für die abschließende Bestimmung der Korridorbegrenzung nicht mehr gebraucht. Daher können mittels der Erfindung ansonsten evtl. auftretende Rundungsproblematiken vermieden werden. Von der Korridorbegrenzung kann schließlich auf die Lage des Korridors geschlossen werden, da für jeden der zur Bildung der Korridorbegrenzung herangezogene Abschnitt bekannt und graphisch darstellbar ist, welche Seite zum Korridor und welche Seite zur Umgebung weist.

Der Aufenthaltsbereich ist vorzugsweise ein für ein Fahrzeug zugelassener Aufenthaltsbereich, wobei die Umgebung ein unzulässiger Bereich ist. Alternativ kann jedoch auch genau umgekehrt der Korridor einen unzulässigen Bereich gegenüber der Umgebung als zulässigen Aufenthaltsbereich definieren.

Der Korridor ist eine zweidimensionale Fläche oder ein dreidimensionaler Raum. Die Erfindung ist entweder so ausgebildet, dass sie eine Korridorbegrenzung um einen zweidimensionalen Korridor bestimmt und anzeigt, oder so ausgebildet, dass sie eine Korridorbegrenzung um einen dreidimensionalen Korridor bestimmt und anzeigt. Ggf. ist mittels der Erfindung auch das Bestimmen der Korridorbegrenzung um den zwei- und den dreidimensionalen Korridor möglich.

Der Korridor ist vorzugsweise ein zweidimensionaler Seeweg für Schiffe, insbesondere an einer Wasseroberfläche. Alternativ ist der Korridor ein, insbesondere dreidimensionaler, Seeweg, insbesondere für Unterseeboote, wobei dieser Seeweg zumindest teilweise unterhalb der Wasseroberfläche verläuft.

In einer weiteren Alternative ist der Korridor ein Luftweg, insbesondere für Flugzeuge. Schließlich kann der Korridor auch ein Landweg sein bzw. einen Bereich oberhalb oder unterhalb der Erdoberfläche, bspw. als Tunnel definieren. Auch eine Kombination dieser Wege ist möglich.

Im Einzelnen weist die Erfindung mehrere wesentliche Verfahrensschritte auf, die vorzugsweise mittels eines Computerprogramms auf einer Recheneinrichtung bzw. mittels dieser Recheneinrichtung durchgeführt werden. Gemäß einem Verfahrensschritt 1.1) wird wenigstens ein Schnitt wenigstens einer Teilbereichsbegrenzung wenigstens eines Teilbereichs mit jeweils wenigstens einer anderen Teilbereichsbegrenzung wenigstens eines anderen Teilbereichs ermittelt. Im zweidimensionalen Fall ist der Schnitt ein Schnittpunkt, wobei wenigstens zwei Schnittpunkte ermittelt werden. Im dreidimensionalen Fall ist der Schnitt eine Schnittkurve bzw. vorzugsweise jeweils eine die Schnittkurve bildende Menge von Schnittgeraden.

Gemäß einem Verfahrensschritt 1.2) werden die vom Schnitt begrenzten Abschnitte der jeweiligen Teilbereichsbegrenzung als die jeweiligen Teilbereichsbegrenzungsabschnitte bestimmt. Im zweidimensionalen Fall sind dies zwischen den Schnittpunkten angeordnete Abschnitte der Teilbereichsbegrenzung. Im dreidimensionalen Fall sind diese Abschnitte Flächen beiderseits der geschlossenen Kurven. Ferner werden auch Teilbereichsbegrenzungen, für die jeweils kein Schnitt ermittelt wurde, als jeweilige Teilbereichsbegrenzungsabschnitte bestimmt.

Weiter wird gemäß einem Verfahrensschritt 1.3) ermittelt, ob die jeweiligen Teilbereichsbegrenzungsabschnitte außerhalb oder innerhalb des jeweils anderen Teilbereichs liegen. Vorzugsweise werden die Verfahrensschritte 1. 1), 1.2) und 1.3) dabei für jede Zweierkombination von Teilbereichen bzw. für jeden Teilbereich in Kombination mit jedem jeweils anderen Teilbereich durchgeführt. Weiter wird gemäß einem Verfahrensschritt 1.4) die Korridorbegrenzung aus den außerhalb jedes jeweils anderen Teilbereichs liegenden Abschnitten dieser als außerhalb wenigstens eines jeweils anderen Teilbereichs liegend ermittelten Teilbereichsbegrenzungsabschnitte bestimmt. Die Korridorbegrenzung wird somit aus Abschnitten aller Teilbereichsbegrenzungen gebildet, die nicht innerhalb irgendeines jeweils anderen Teilbereichs liegen bzw. als dort liegend ermittelt werden. Insbesondere werden erfindungsgemäß für jeden Teilbereich die als innerhalb jedes anderen Teilbereichs liegend ermittelten Teilbereichsbegrenzungsabschnitte verworfen bzw. nicht zum Bestimmen der Korridorbegrenzung herangezogen. Dabei können mehrere verworfene Teilbereichsbegrenzungsabschnitte im Sonderfall mehrerer sich an gleicher Stelle überlappender Teilbereiche auch deckungsgleich sein oder deckungsgleiche Abschnitte aufweisen. Im Fall mehrerer Teilbereiche wird die Korridorbegrenzung somit aus nicht verworfenen Teilbereichsbegrenzungsabschnitten mehrerer Teilbereiche bzw. nicht verworfenen Abschnitten mehrerer Teilbereiche bestimmt. Schließlich folgt der Verfahrensschritt 1.5) des Anspruchs 1.

Ggf. wird der Korridor entlang der vorgesehenen Wegstrecke in Fahrtrichtung nach vorne durch die Vordergrenze und nach hinten durch die Hintergrenze begrenzt. In diesem Fall wird der Korridor auch aus der Vordergrenze und der Hintergrenze oder Teilen davon bestimmt, wohingegen in Fahrtrichtung vor der Vordergrenze und/oder hinter der Hintergrenze liegende Teilbereichsbegrenzungsabschnitte oder Teile davon verworfen werden. Die Vordergrenze und/oder die Hintergrenze können dabei bspw. gemäß einer vorgegebenen Fahrgeschwindigkeit in Fahrtrichtung verschoben werden, so dass die Korridorbegrenzung in Abhängigkeit von einer Zeit festgelegt werden kann. Auf diese Weise liefert die Erfindung mit geringem Rechenaufwand eine sich nicht ungewollt verschiebende und vollständige Korridorbegrenzung.

Vorzugsweise wird zunächst für jeweils einen Teilbereichsbegrenzungsabschnitt mehrerer, insbesondere beider, Teilbereiche ermittelt, ob dieser jeweilige Teilbereichsbegrenzungsabschnitt außerhalb oder innerhalb der anderen Teilbereiche, insbesondere des jeweils anderen Teilbereichs, liegt.

Weitere Teilbereichsbegrenzungsabschnitte zwischen den Schnittpunkten bzw. beiderseits der Schnittkurve werden vorzugsweise in alternierender Folge als außerhalb oder innerhalb des jeweils anderen Teilbereichs liegend bestimmt. Dabei wird ausgegangen von dem Teilbereichsbegrenzungsabschnitt, für den bereits bekannt ist, ob er außerhalb oder innerhalb des jeweils anderen Teilbereichs liegt. Die Erfindung hat erkannt, dass auf diese Weise mit geringem Aufwand die Teilbereichsbegrenzungsabschnitte jedes Teilbereichs ermittelt werden können, die keinen Beitrag zur Korridorbegrenzung leisten, gegenüber Teilbereichsbegrenzungsabschnitten, die einen Beitrag hierzu leisten, sofern sie nicht ganz oder teilweise ausgeschlossen werden, wenn sie innerhalb eines weiteren Teilbereichs liegen.

Vorzugsweise ist der jeweilige Teilbereich eine einzige polygonale Fläche. Insbesondere ist die Teilbereichsbegrenzung auf ihrem Definitionsintervall [a, b) injektiv, so dass sie keine Schnittpunkte mit sich selbst aufweist. In dem Fall, dass der Teilbereich von einer nicht-injektiven Teilbereichsbegrenzung begrenzt wird, wird dieser Teilbereich gemäß einer Weiterbildung der Erfindung in mehrere Teilbereiche mit jeweils injektiver Teilbereichsbegrenzung zerlegt.

Vorzugsweise wird im Verfahrensschritt 1.3) für zumindest einen Teilbereichsbegrenzungsabschnitt auf folgende Weise ermittelt, ob dieser Teilbereichsbegrenzungsabschnitt außerhalb oder innerhalb des jeweils anderen Teilbereichs liegt: Zunächst wird von einem auf dem Teilbereichsbegrenzungsabschnitt liegenden Punkt als Startpunkt ausgehend, eine Halbgerade definiert. Die Halbgerade ist Teil einer Geraden, die den Teilbereichsbegrenzungsabschnitt in diesem Punkt schneidet. Insbesondere ist der Startpunkt der Halbgeraden kein Berührungspunkt dieser Geraden mit diesem Teilbereichsbegrenzungsabschnitt.

Vorzugsweise wird nachfolgend die Anzahl von Schnittpunkten dieser Halbgeraden mit der jeweils anderen Teilbereichsbegrenzung ermittelt. Der Startpunkt wird dabei derart gewählt, dass er kein Schnittpunkt der beiden Teilbereichsbegrenzungsabschnitte miteinander ist. Denn in einem weiteren Verfahrensschritt wird für den diesen Anfangspunkt aufweisenden Teilbereichsbegrenzungsabschnitt bestimmt, ob dieser Teilbereichsbegrenzungsabschnitt innerhalb oder außerhalb des jeweils anderen Teilbereichs liegt.

In dem Fall, dass eine gerade Anzahl von Schnittpunkten bzw. kein Schnittpunkt ermittelt wurde, wird der jeweilige Teilbereich als außerhalb des jeweils anderen Teilbereichs liegend bestimmt. Andernfalls, nämlich in dem Fall, dass eine ungerade Anzahl von Schnittpunkten ermittelt wurde, wird dagegen der jeweilige Teilbereichsbegrenzungsabschnitt als innerhalb des jeweils anderen Teilbereichs liegend bestimmt. Die Erfindung macht sich dabei die Erkenntnis zu nutze, dass ausgehend vom Anfangspunkt der Halbgeraden ein letzter Schnittpunkt dieser Halbgeraden mit dem jeweils anderen Teilbereich immer ein Punkt ist, in dem die Halbgerade vom Inneren des anderen Teilbereichs zur Umgebung bzw., wenn die Umgebung ein unzulässiger Aufenthaltsbereich ist, vom zulässigen Aufenthaltsbereich in den nicht zulässigen Aufenthaltsbereich wechselt. Davor findet alternierend in den Schnittpunkten ein Wechsel zwischen zulässigen und unzulässigen Teilbereichen statt.

Vorzugsweise ermittelt die Erfindung zum Bestimmen der Halbgeraden zunächst, ob ein auf der Teilbereichsbegrenzung liegender Punkt bzw. potentieller Startpunkt der Halbgeraden auf der jeweils anderen Teilbereichsbegrenzung liegt und/oder ob die Halbgerade mit diesem Punkt als Startpunkt diese andere Teilbereichsbegrenzung in wenigstens einem anderen Punkt berührt. Wenn der Anfangspunkt der Halbgeraden nämlich ein Schnittpunkt mit der anderen Teilbereichsbegrenzung wäre, könnte dieser Anfangspunkt nicht eindeutig einem innerhalb oder außerhalb des anderen Teilbereichs liegenden Abschnitt der Teilbereichsbegrenzung zugeordnet werden. Wenn die Halbgerade die andere Teilbereichsbegrenzung nur berühren, nicht jedoch schneiden würde, erhielte man einen Berührungspunkt, der im Gegensatz zu einem Schnittpunkt nicht bei der Bestimmung der Anzahl von Schnittpunkten der Halbgeraden mit der anderen Teilbereichsbegrenzung zu berücksichtigen wäre.

Vorzugsweise wird daher im dem Fall, dass ermittelt wurde, dass der gewählte Punkt auf der jeweils anderen Teilbereichsbegrenzung liegt, und/oder dass die Halbgerade die Teilbereichsbegrenzung berührt bzw. berühren würde, ein anderer auf der Teilbereichsbegrenzung liegender Punkt als Anfangspunkt der Halbgeraden gewählt bzw. eine andere bzw. anders ausgerichtete Halbgerade gewählt. Alternativ oder zusätzlich wird eine Verschiebung der Teilbereiche relativ zueinander durchgeführt. Diese Verschiebung ist bevorzugt eine minimale Verschiebung bzw. eine Verschiebung um einen Wert, der unterhalb eines vorgegebenen Grenzwerts liegt.

Vorzugsweise wird die Richtung der Halbgeraden bzw. die Richtung einer die Halbgerade umfassenden Geraden eines Teilbereichs so gewählt, dass sie sich, insbesondere möglichst weitgehend, vorzugsweise maximal, von Richtungen des Ausgangspunkts zu den Eckpunkten des anderen Teilbereichs bzw. Polygons unterscheidet. Insbesondere wird die Richtung der Halbgeraden so gewählt, dass eine Summe oder ein Mittelwert oder ein anderer aus diesen Abweichungen gebildeter Wert möglichst groß oder maximal wird.

In einer weniger bevorzugten Ausführungsform kann für mehr als einen Teilbereichsbegrenzungsabschnitt jeder Teilbereichsbegrenzung oder für alle Teilbereichsbegrenzungsabschnitte auf die beschriebene Weise bestimmt werden, ob der jeweilige Teilbereichsbegrenzungsabschnitt innerhalb oder außerhalb des jeweils anderen Teilbereichs liegt.

Vorzugsweise gehen dem Verfahrensschritt 1.1), nämlich dem Ermitteln der Schnittpunkte der Teilbereichsbegrenzung eines Teilbereichs mit einer anderen Teilbereichsbegrenzung eines anderen Teilbereichs, mehrere Verfahrensschritte voraus, die prüfen, ob eine Korrektur wenigstens eines der Teilbereiche erforderlich ist, und die diese Korrektur ggf. durchführen. Insbesondere umfassen diese vorausgehenden Verfahrensschritte ein Ermitteln, ob sich die Teilbereichsbegrenzungen in wenigstens einem Punkt, der insbesondere kein Schnittpunkt dieser Teilbereichsbegrenzungen miteinander ist, berühren. Ferner umfassen diese Verfahrensschritte vorzugsweise ein, insbesondere minimales, Verschieben von wenigstens einem der Teilbereiche gegenüber dem jeweils anderen Teilbereich in dem Fall, dass ermittelt wurde, dass sich diese Teilbereichsbegrenzungen in wenigstens einem Punkt berühren. Dieses Verschieben wird vorzugsweise derart bzw. so weit, insbesondere um einen Wert, der unterhalb eines vorgegebenen Grenzwerts liegt, durchgeführt, bis sich diese Teilbereichsbegrenzungen nicht mehr berühren, jedoch in wenigstens zwei Punkten scheiden. Auf diese Weise stellt die Erfindung eindeutige Schnittpunkte und somit eindeutig innerhalb oder außerhalb der jeweils anderen Teilbereichsbegrenzung liegende Teilbereichsbegrenzungsabschnitte sicher.

Vorzugsweise wird zum Verschieben eines Teilbereichs ein, insbesondere minimaler, Verschiebungsvektor derart bestimmt, dass sich die Richtung des Verschiebungsvektors von den Richtungen sämtlicher Seiten des jeweils anderen Teilbereichs unterscheidet. Die jeweilige Teilbereichsbegrenzung ist dabei ein Polygon oder ein Polyeder und wird durch in Koordinatenform vorliegende Eckpunkte, insbesondere Polygoneckpunkte oder Polyedereckpunkte, definiert. Die Seiten sind im zweidimensionalen Fall Seitengeraden, die die jeweiligen Teilbereichsbegrenzungsabschnitte aufweisen. Im dreidimensionalen Fall sind die Seiten Seitenflächen, welche die Teilbereichsbegrenzungsabschnitte aufweisen.

Wenn ein zwischen zwei Schnittpunkten angeordneter bzw. von wenigstens einer Schnittkurve begrenzter Teilbereichsbegrenzungsabschnitt nicht durchgängig geradlinig verläuft, werden ggf. mehrere Seiten für diesen Teilbereichsbegrenzungsabschnitt ermittelt. Zu jeder Seite wird der Abstand des Punkts senkrecht zu dieser Seite ermittelt.

Vorzugsweise weicht die Richtung des Verschiebungsvektors maximal oder zumindest möglichst weitgehend von den Richtungen sämtlicher Seiten, insbesondere Seitengeraden oder Seitenflächen, des jeweils anderen Teilbereichs ab. Insbesondere wird die Richtung des Verschiebungsvektors so gewählt, dass eine Summe, ein Mittelwert oder ein anderer aus diesen Abweichungen gebildeter Wert möglichst groß oder maximal wird. Wenn im dreidimensionalen Fall unter der Seite eine Fläche zu verstehen ist, so ist als Richtung dieser Seite die Menge der Richtungen aller in dieser Fläche liegender Geraden zu verstehen, so dass der Verschiebungsvektor eine nicht in dieser Fläche liegende Richtungskomponente aufweisen muss. Die Koordinaten der Eckpunkte des jeweiligen Teilbereichs werden anschließend gemäß diesem Verschiebungsvektor verschoben.

Vorzugsweise wird das ggf. durchzuführende Verschieben des Teilbereichs bzw. der Teilbereiche im Detail mit folgenden Verfahrensschritten durchgeführt: Zunächst wird der Abstand eines Punkts der Teilbereichbegrenzung, bspw. eines Polygoneckpunkts bzw. des Startpunkts der Halbgeraden zu jeder Seite der jeweils anderen Teilbereichsbegrenzung bestimmt.

Im Falle eines Berührens der Polygone bzw. Polyeder wird theoretisch ein minimaler Abstand von 0 erreicht. Durch Rundungsfehler kann ein ermittelter Abstand jedoch geringfügig vom tatsächlichen Abstand abweichen. Ein ermittelter Abstand bleibt im Falle eines tatsächlichen Berührens jedoch in jedem Fall unter einem, insbesondere vorgegebenen, Höchstabstand bzw. Höchstwert.

Vorzugsweise wird in einem weiteren Schritt dieser Punkt, insbesondere Polygoneckpunkt bzw. Startpunkt der Halbgeraden, als auf dem jeweiligen anderen Teilbereichsbegrenzungsabschnitt liegend bestimmt und/oder der diesen Punkt aufweisende Teilbereichsbegrenzungsabschnitt als diesen anderen Teilbereichsbegrenzungsabschnitt berührend bestimmt, wenn der bestimmte Abstand zu der diesen anderen Teilbereichsbegrenzungsabschnitt aufweisenden Seite kleiner als dieser Höchstabstand bzw. Höchstwert ist.

Vorzugsweise werden in dem Fall, dass der Korridor um die zu bestimmende Korridorbegrenzung zwei Dimensionen aufweist und die Schnitte Schnittpunkte sind, für diese Schnittpunkte der Teilbereichsbegrenzungen miteinander Ursprungskoordinaten ermittelt. Diese Ursprungskoordinaten sind vorzugsweise eindimensionale Koordinaten, die eindeutig Positionen der Schnittpunkte auf der jeweiligen Korridorbegrenzung kennzeichnen.

Die ermittelten Koordinaten werden vorzugsweise in aufsteigender Reihenfolge gemäß der Reihung der Schnittpunkte auf der jeweiligen Teilbereichsbegrenzung sortiert. Insbesondere ist jede Teilbereichsbegrenzung auf einem Definitionsbereich bzw. einem Intervall [a, b] definiert. Die auf dieser Teilbereichsbegrenzung liegenden Schnittpunkte werden somit in der Reihenfolge angeordnet, wie Punkte auf der Teilbereichsbegrenzung dieses Intervall durchlaufen. Dadurch ergeben sich Teilbereichsbegrenzungsabschnitte zwischen den Schnittpunkten, die abwechselnd innerhalb und außerhalb des jeweils anderen Teilbereichs liegen.

Vorzugsweise werden daher die jeweiligen Teilbereichsbegrenzungsabschnitte zwischen den Schnittpunkten als Folge von Abschnitten zwischen Paaren von gemäß der Sortierung aufeinanderfolgenden Koordinaten bestimmt. Dabei ist ein Endpunkt des letzten Teilbereichsbegrenzungsabschnitts der jeweiligen Teilbereichsbegrenzung zugleich ein Anfangspunkt des ersten Teilbereichsbegrenzungsabschnitts dieser Teilbereichsbegrenzung. Ein Endpunkt jedes anderen Teilbereichsbegrenzungsabschnitts dieser Teilbereichsbegrenzung ist zugleich ein Anfangspunkt des jeweils folgenden Teilbereichsbegrenzungsabschnitts dieser Teilbereichsbegrenzung.

Die Teilbereichsbegrenzungsabschnitte werden vorzugsweise durch Vektoren in der Punkt-Richtungsform gemäß der allgemeinen Form *x̅*= *a̅* + λ*b̅* beschrieben, wobei *x̅* auf den Startpunkt weist, *b̅* die Richtung vorgibt und λ, eine Länge des Richtungsvektors definiert. Vorzugsweise nimmt λ für jeden Vektor, der sich mit einem anderen Vektor schneidet, einen Wert zwischen 0 und 1 an. Bevorzugt werden sämtliche Berechnungen zum Bestimmen der Teilbereichsbegrenzungsabschnitte, die Teil der Korridorbegrenzung sind, mit den eindimensionalen Ursprungskoordinaten durchgeführt. Zweidimensionale Koordinaten dieser Schnittpunkte, insbesondere für eine graphische Darstellung der Korridorbegrenzung, werden bevorzugt erst dann berechnet, nachdem alle Intervalle bzw. Abschnitte zwischen den Schnittpunkten bestimmt worden sind. Diese zweidimensionalen Koordinaten sind vorzugsweise kartesische Koordinaten, können jedoch auch Koordinaten eines anderen Bezugssystems sein.

Gemäß einer Weiterbildung der Erfindung können der Umgebung zugeordnete Bereiche in einer Umgebung von Schnitten mit Segmenten, bspw. Kreissegmenten, aufgefüllt werden, die dem Korridor zugeordnet werden. Dadurch kann ein geglätteter Verlauf der Korridorbegrenzung erhalten werden.

Bei dem Verfahren zur graphischen Darstellung einer Korridorbegrenzung wird diese Korridorbegrenzung gemäß dem vorstehend beschriebenen Verfahren bestimmt und graphisch auf einem geeigneten Anzeigemittel, bspw. einem Display oder Bildschirm, angezeigt. Für jeden Abschnitt der Korridorbegrenzung ist bekannt, welche Seite dieses Abschnitts zum Korridor und welche Seite zur Umgebung bzw. zu einem unzulässigen Bereich weist. Insbesondere wird die Korridorbegrenzung durch mehrere Vektoren in der Punkt-Richtungsform beschrieben, wobei jeder dieser Vektoren eine linke und eine rechte Seite aufweist, die jeweils eindeutig dem Korridor oder der Umgebung zugewandt ist. Zur graphischen Veranschaulichung der Lage des Korridors werden daher bevorzugt Bereiche links und rechts der Korridorbegrenzung bzw. der Vektoren unterschiedlich graphisch dargestellt. Bspw. werden in einem dem Korridor zugeordneten Bereich neben der Korridorbegrenzung Punkte oder Striche dargestellt, so dass ein Betrachter eindeutig den Korridor von seiner Umgebung unterscheiden kann.

Alle Verfahrensschritte bzw. Rechenschritte zur Durchführung des Verfahrens können in Bezug auf reale Koordinaten des Korridors, bspw. im Gewässer, in der Luft oder an Land durchgeführt werden. Alternativ oder zusätzlich kann ein Bezug für alle Verfahrensschritte bzw. Rechenschritte, insbesondere zum Korridor, zu den Teilbereichen, den Teilbereichsbegrenzungen, ihren Abschnitten und den verschiedenen Punkten, durch andere, insbesondere gegenüber diesen Koordinaten transformierte, Koordinaten gegeben sein. In einer Variante beziehen sich die Koordinaten auf die graphische Darstellung. Insbesondere können die Koordinaten den Bildschirm bzw. das Display als Bezugssystem aufweisen. Zum Anzeigen der Korridorbegrenzung eines dreidimensionalen Korridors wird bevorzugt ein zweidimensionales Abbild dieser Korridorbegrenzung erzeugt und auf dem Bildschirm bzw. Display angezeigt.

Die Vorrichtung zur Durchführung des Verfahrens zum Bestimmen der Korridorbegrenzung bzw. zur graphischen Darstellung der Korridorbegrenzung weist hierzu geeignete Mittel, insbesondere Rechenmittel und Anzeigemittel, auf.

Das Computerprogramm ist insbesondere ein Computerprogrammprodukt bzw. eine Software. Mittels des Computerprogramms stellt eine Recheneinrichtung bzw. ein Computer die Mittel zur Durchführung des Verfahrens zum Bestimmen des Korridors bereit.

Weitere Ausführformen ergeben sich aus den Ansprüchen sowie aus den anhand der Zeichnung näher erläuterten Ausführungsbeispielen. In der Zeichnung zeigen:
- Fig. 1: einen Korridor, der zwei Teilbereiche aufweist gemäß einem ersten Ausführungsbeispiel;
- Fig. 2: einen erweiterten Korridor, der die zwei Teilbereichen des ersten Ausführungsbeispiels von Fig. 1 und zusätzlich einen dritten Teilbereich umfasst;
- Fig. 3: zwei sich teilweise überlappende und berührende Teilbereiche gemäß einem zweiten Ausführungsbeispiel;
- Fig. 4: zwei weitere sich teilweise überlappende Teilbereiche mit einem Anfangspunkt des ersten Teilbereichs auf der Teilbereichsbegrenzung des zweiten Teilbereichs gemäß einem dritten Ausführungsbeispiel der Erfindung;
- Fig. 5: eine graphische Darstellung einer Korridorbegrenzung gemäß einem vierten Ausführungsbeispiel der Erfindung und
- Fig. 6: drei Teilbereiche mit Verbindungskurven gemäß einem fünften Ausführungsbeispiel der Erfindung.

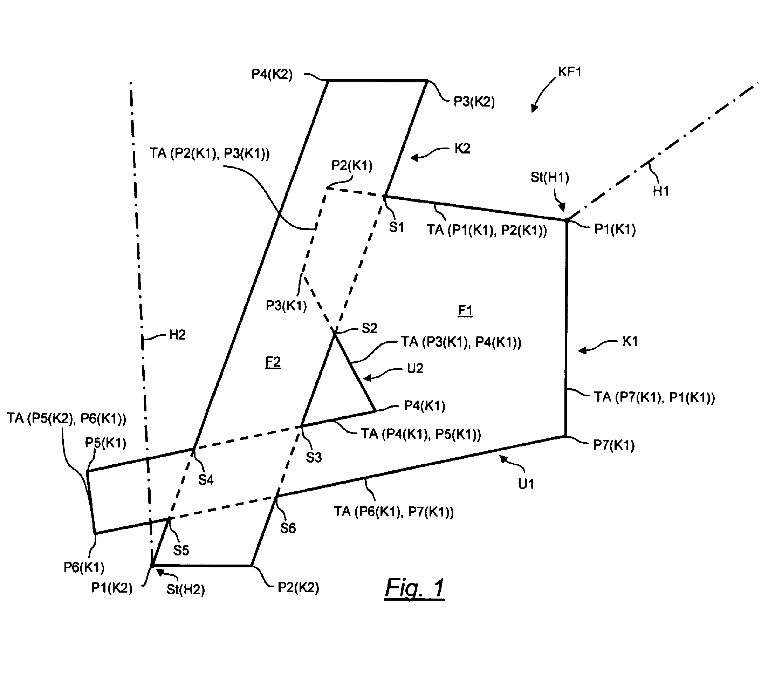

Fig. 1 zeigt einen Korridor KF1, insbesondere Seeweg, der einen zulässigen Aufenthaltsbereich für Wasserfahrzeuge, die diesen Korridor KF1 passieren dürfen, festlegt, gemäß einem ersten Ausführungsbeispiel der Erfindung. Dieses Ausführungsbeispiel und die in den weiteren Figuren gezeigten Ausführungsbeispiele beziehen sich auf eine zweidimensionale Ausführung der Erfindung. Als nicht in den Figuren gezeigte Alternative zu diesen Ausführungsbeispielen kann mittels der Erfindung wenigstens eine Korridorbegrenzung eines dreidimensionalen Korridors bestimmt werden.

Der Korridor KF1 umfasst zwei sich gegenseitig teilweise überlappende Teilbereiche F1 und F2. Die Teilbereiche F1 und F2 sind von einer Teilbereichsbegrenzung K1 bzw. K2 begrenzt. Die Teilbereichsbegrenzungen K1 und K2 sind Kurven in der zweidimensionalen Ebene und umfassen mehrere Teilbereichsbegrenzungsabschnitte TA (P1 (K1), P2 (K1)) bis TA (P7 (K1), P1 (K1)) bzw. TA (P1 (K2), P2 (K2)) bis TA (P4 (K2), P1 (K2)). Diese Teilbereichsbegrenzungsabschnitte TA sind hier Verbindungsstrecken benachbarter Polygoneckpunkte P1 (K1) - P7 (K1) bzw. P1 (K2) - P4 (K2) des Teilbereichs F1 bzw. F2. Die Teilbereiche F1 und F2 sind mithin wie der daraus zu bestimmende Korridor KF1 Polygone.

Die Polygoneckpunkte P werden bspw. von einer Führungsstelle bzw. Marineführungsstelle vorgegeben, so dass mittels dieser Polygoneckpunkte P1 bis P7 die Teilbereiche F1 und F2 und somit der Korridor KF1 bzw. der zulässige Aufenthaltsbereich für das Wasserfahrzeug vorgegeben wird.

Die Erfindung ermöglicht es, ausgehend von den über die Polygoneckpunkte P vorgegebenen Teilbereichen F1 und F2, auf einfache und robuste Weise mit nur geringem Rechenaufwand wenigstens eine gemeinsame Umhüllende der Teilbereiche F1 und F2, nämlich Korridorbegrenzungen U1 und U2 zu bestimmen und auf einem Anzeigegerät, insbesondere Display, anzuzeigen. Hierzu werden die Teilbereichsbegrenzungen K1 und K2 jeweils nicht vollständig dargestellt. Stattdessen werden gezielt nur Teilbereichsbegrenzungsabschnitte TA der Teilbereichsbegrenzungen K1 und K2 ausgewählt, die tatsächlich auch Teil der zu bestimmenden Korridorbegrenzungen U1 und U2 sind. Die übrigen Teilbereichsbegrenzungsabschnitte TA, die innerhalb des jeweils anderen Teilbereichs F1 bzw. F2 liegen, werden hingegen verworfen, da sie keinen Übergang zwischen dem Korridor KF1 bzw. zulässigen Aufenthaltsbereich und einem unzulässigen Umgebungsbereich des Korridors KF1 beschreiben.

Erfindungsgemäß wird zunächst geprüft, ob die Teilbereiche F1 und F2 für das erfindungsgemäße Verfahren geeignet relativ zueinander positioniert sind. Insbesondere wird die Lage der Polygoneckpunkte P (K1) und P (K2) relativ zur jeweils anderen Teilbereichsbegrenzung K2 bzw. K1 überprüft. Jeder Polygoneckpunkt P1 ist zugleich Anfangspunkt und Endpunkt der jeweiligen Teilbereichsbegrenzung K. Die Teilbereichsbegrenzung K ist eine hinreichend stetige Kurve K (t) mit t aus [a, b] und K (a) = K (b). Ferner ist K (t) auf [a, b) injektiv, d.h. hat insbesondere keine Schnittpunkte mit sich selbst. Folglich weist jeder von der jeweiligen Teilbereichsbegrenzung K umgebene Teilbereich F jeweils eine einzige Polygonfläche auf.

Für das Verfahren verwendet die Erfindung mehrere verschiedene Algorithmen, die sich z. T. gegenseitig aufrufen.

Ein Algorithmus A3 führt eine Prüfung durch, ob die Teilbereiche F1 und F2 für das erfindungsgemäße Verfahren geeignet relativ zueinander positioniert sind und korrigiert ggf. die Lage eines der Teilbereiche oder beider Teilbereiche. Der Algorithmus A3 ist mithin ein Korrekturalgorithmus. Der Algorithmus A3 verwendet einen Algorithmus A2, der bestimmt, ob ein Punkt auf einer Teilbereichsbegrenzung liegt, insbesondere ob einer der Polygoneckpunkte P (K1) und P (K2) auf der jeweils anderen Teilbereichsbegrenzung K2 bzw. K1 liegt.

Ferner verwendet der Algorithmus A3 einen Algorithmus A1, der für beide Teilbereichsbegrenzungen K1 und K2 bestimmt, ob sich diese berühren. Falls erforderlich, verschiebt der Algorithmus A3 die Teilbereichsbegrenzung K1 bzw. K2 oder beide Teilbereichsbegrenzungen K1 und K2, insbesondere minimal, soweit, dass sich die Teilbereichsbegrenzungen K1 und K2 gemäß einer Überprüfung durch den Algorithmus A1 nicht berühren und dass gemäß dem Algorithmus A2 keiner der Polygoneckpunkte P (K1) und P (K2) auf der jeweils anderen Teilbereichsbegrenzung K2 bzw. K1 liegt.

Die Algorithmen A1 und A2 verwenden Seitengeraden, auf denen die Abschnitte der jeweiligen Teilbereichsbegrenzung K1 bzw. K2 liegen. Insbesondere liegen auf jeder Seitengeraden Vektoren zwischen aufeinanderfolgenden Polygoneckpunkten P. Daher werden zur Bestimmung der Seitengeraden Vektoren zwischen den in Koordinatenform vorliegenden Polygoneckpunkten zu diesen Seitengeraden verlängert.

Zum Bestimmen, ob sich gemäß Algorithmus A1 zwei Teilbereichsbegrenzungen berühren oder gemäß Algorithmus A2 ein Punkt auf der jeweils anderen Teilbereichsbegrenzung K1 bzw. K2 liegt, werden daher die Abstände aller Polygoneckpunkte P zu allen bestimmten Seitengeraden des jeweils anderen Polygons K bestimmt.

Dabei kann es zwar vorkommen, dass bspw. ein Punkt als auf einer Seitengeraden liegend bestimmt wird, obwohl er tatsächlich lediglich auf dessen Verlängerung auf der Seitengeraden liegt. In diesem Fall wird eine Korrektur durchgeführt, die nicht zwangsläufig hätte durchgeführt werden müssen. Die Erfindung hat jedoch erkannt, dass dadurch der Korrekturalgorithmus insgesamt mit geringerem Rechenaufwand durchgeführt wird, als wenn dieser Umstand berücksichtigt werden würde.

Auf diese Weise wird gemäß dem Algorithmus A1 bestimmt, ob sich die zwei Teilbereichsbegrenzungen berühren. Dies trifft nämlich in dem Fall, dass der Teilbereich F1 bzw. F2 durch ein Polygon beschrieben werden kann, allenfalls in dem Fall zu, dass einer der Polygoneckpunkte P (K1) bzw. P (K2) auf einer Seitengeraden des jeweils anderen Teilbereichs F1 bzw. F2 liegt.

Der Algorithmus A3 verschiebt das Polygon bzw. die Teilbereichsbegrenzung F ggf. sukzessive bzw. in Schritten mehrmals hintereinander, bis ein vorgegebener Mindestabstand jedes Polygoneckpunkts P von jeder Seitengeraden des jeweils anderen Polygons bzw. des jeweils anderen Teilbereichs F1 bzw. F2 erreicht ist. Dafür ruft der Algorithmus A3 ggf. mehrmals hintereinander die Algorithmen A1 und/oder A2 auf. Zum Verschieben berechnet der Algorithmus A3 einen minimalen Verschiebevektor für den Teilbereich F1 bzw. F2, dessen Richtung sich möglichst stark von sämtlichen Richtungen der Seitengeraden des jeweils anderen Teilbereichs F1 bzw. F2 unterscheidet. Dadurch wird nämlich in möglichst wenigen Schritten eine geeignete Verschiebung des jeweiligen Teilbereichs F erreicht.

Des Weiteren verwendet die Erfindung einen Algorithmus A4, der die Schnittpunkte der Teilbereichsbegrenzungen K1 und K2 miteinander in Form von Ursprungskoordinaten berechnet. Insbesondere werden bereits die Seitengeraden der Teilbereichsbegrenzungen K1 und K2 mittels Vektoren erhalten. Diese Seitengeraden werden mit der sog. Punktrichtungsform der Vektorrechnung beschrieben, und die Schnittpunkte durch einfache Matrizenrechnung aus diesen Vektoren berechnet. Es ergeben sich Schnittpunkte S1, S2, S3, S4, S5 und S6. Bspw. wird der Teilbereichsbegrenzungsabschnitt TA (P4 (K1), P5 (K1)) durch einen Vektor beschrieben, der vom Polygoneckpunkt P4 (K1) in Richtung des Polygoneckpunkts P5 (K1) weist. Dieser Vektor des Teilbereichs F1 schneidet einen Vektor des Teilbereichs F2, nämlich einen auf dem Teilbereichsbegrenzungsabschnitt TA (P4 (K2), P1 (K2)) angeordneten Vektor im Schnittpunkt S4.

Für jeweils einen zwischen zwei Schnittpunkten S liegenden Teilbereichsbegrenzungsabschnitt TA soll nun für jeden Teilbereich F1 und F2 bestimmt werden, ob der jeweilige Teilbereichsbegrenzungsabschnitt innerhalb oder außerhalb des jeweils anderen Teilbereichs F1 bzw. F2 liegt. Hierzu bestimmt ein Algorithmus A5 eine Halbgerade H1, die im Polygoneckpunkt P1 (K1) als Startpunkt St (H1) beginnt, und eine weitere Halbgerade H2, die im Polygoneckpunkt P1 (K2) als Startpunkt St (H2) beginnt. Die Halbgerade H1 wird dabei derart bestimmt, dass sie den Teilbereich F2 nicht berührt. Die Halbgerade H2 wird entsprechend derart bestimmt, dass sie den Teilbereich F1 nicht berührt. Insbesondere bestimmt der Algorithmus A4 die Richtungen des Polygoneckpunkts P1 (K1) zur allen Polygoneckpunkten P (K2) und wählt die Richtung der Halbgeraden H1 derart, dass sie sich, insbesondere möglichst stark, bevorzugt maximal, von sämtlichen Richtungen des Polygoneckpunkts P1 (K1) zu den Polygoneckpunkten P (K2) unterscheidet. Auf analoge Weise wird die Richtung der Halbgeraden H2 in Abhängigkeit von den Richtungen des Polygoneckpunkts P1 (K2) zu den Polygoneckpunkten P (K1) bestimmt.

Abweichend hiervon können die Richtungen der Halbgeraden jedoch auch auf andere Weise, bspw. unter Heranziehung der Algorithmen A1 und/oder A2 bestimmt werden. Die Startpunkte der Halbgeraden müssen nicht zwangsläufig die Polygoneckpunkte P1 (K) sein, sondern können ggf. beliebige andere Punkte, nicht jedoch die Schnittpunkte S1 bis S6 auf der jeweiligen Teilbereichsbegrenzung K1 bzw. K2 sein. Schließlich weist die Erfindung noch einen Algorithmus A6 auf, der die Anzahl der Schnittpunkte S1 bis S6 bestimmt.

Die Schnittpunkte S1 bis S6 werden auf der jeweiligen Teilbereichsbegrenzung K1 bzw. K2 in ihrer Reihenfolge auf der Teilbereichsbegrenzung K1 bzw. K2 gemäß ihrem jeweiligen Definitionsbereich angeordnet. Für die Teilbereichsbegrenzung K1 ist dies die Reihenfolge S1 bis S6. Auf der Teilbereichsbegrenzung K2 werden die Schnittpunkte hingegen in der Reihenfolge S6, S3, S2, S1, S4 und S5 angeordnet. Zwischen jeweils aufeinanderfolgend angeordneten Schnittpunkten S1 bis S6 liegt ein Teilbereichsabschnitt des Teilbereichs F1 bzw. F2, der entweder innerhalb oder außerhalb des jeweils anderen Teilbereichs F1 bzw. F2 liegt. Jeder Punkt auf diesem Teilbereichsabschnitt liegt ebenfalls innerhalb bzw. außerhalb des jeweils anderen Teilbereichs F1 bzw. F2. So ist ein Teilbereichsbegrenzungsabschnitt TA der Teilbereichsbegrenzung K1 zwischen den Schnittpunkten S6 und S1 gegeben. Insbesondere weist dieser Teilbereichsbegrenzungsabschnitt TA Strecken als Abschnitte von Seitengeraden bzw. Teilbereichsbegrenzungsabschnitte TA (S6, P7 (K1)), TA (P7 (K1), P1 (K1)) und TA (P1 (K1), S1) auf.

Mittels der Halbgeraden H1 bestimmt ein Algorithmus A6 nun, ob der Startpunkt St (H1) dieser Halbgeraden bzw. der Polygoneckpunkt P1 (K1) und somit der Teilbereichsbegrenzungsabschnitt TA zwischen den Schnittpunkten S6 und S1 innerhalb oder außerhalb des Teilbereichs F2 liegt. Dazu ermittelt der Algorithmus A6 die Schnittpunkte der Halbgeraden H1 mit der Teilbereichsbegrenzung K2. Es wird eine Anzahl von 0 Schnittpunkten, mithin eine gerade bzw. keine ungerade Anzahl ermittelt, woraus geschlossen wird, dass der Startpunkt St (H1) der Halbgeraden H1 bzw. der Polygoneckpunkt P1 (K1) bzw. der Teilbereichsbegrenzungsabschnitt TA der Teilbereichsbegrenzung K2 zwischen den Schnittpunkten S6 und S1 außerhalb des Teilbereichs F2 liegt.

Auf analoge Weise ermittelt der Algorithmus A6, dass die Halbgerade H2 zwei Schnittpunkte S, mithin eine gerade Anzahl von Schnittpunkten S, mit der Teilbereichsbegrenzung K1 aufweist. In Erwiderung darauf wird der Teilbereichsbegrenzungsabschnitt TA der Teilbereichsbegrenzung K2 zwischen den Schnittpunkten S5 und S6, auf welcher der Startpunkt St (H2) der Halbgeraden H2 liegt, als außerhalb des Teilbereichs F1 liegend bestimmt.

Nachfolgend bestimmt die Erfindung die Teilbereichsbegrenzungsabschnitte TA zwischen den Schnittpunkten S1 bis S6 für die jeweilige Teilbereichsbegrenzung K1 bzw. K2 als außerhalb bzw. innerhalb des jeweils anderen Teilbereichs F1 bzw. F2 liegend. Insbesondere werden auf der Teilbereichsbegrenzung K1 die Teilbereichsbegrenzungsabschnitte TA zwischen den Schnittpunkten S1 und S2, S3 und S4 sowie S5 und S6 als innerhalb des Teilbereichs F2 liegend bestimmt. Die Teilbereichsbegrenzungsabschnitte TA zwischen den Schnittpunkten S2 und S3, sowie S4 und S5 werden wie der Teilbereichsbegrenzungsabschnitt TA zwischen den Schnittpunkten S6 und S1 als außerhalb des Teilbereichs F2 liegend bestimmt. Auf analoge Weise wird mit den Teilbereichsbegrenzungsabschnitten TA der Teilbereichsbegrenzung K2 verfahren.

Schließlich werden alle als außerhalb des jeweils anderen Teilbereichs F1 bzw. F2 liegend bestimmten Teilbereichsbegrenzungsabschnitte TA zur Bildung der Korridorbegrenzung U1 herangezogen. Die übrigen Teilbereichsbegrenzungsabschnitte TA, nämlich die als innerhalb des jeweils anderen Teilbereichs F1 bzw. F2 liegend bestimmten Teilbereichsbegrenzungsabschnitte TA, werden hingegen verworfen.

Insgesamt erhält man in diesem Ausführungsbeispiel die beiden Korridorbegrenzungen U1 und U2, wobei die Korridorbegrenzung U2 eine verbotene Zone innerhalb des erlaubten Korridors KF1 definiert.

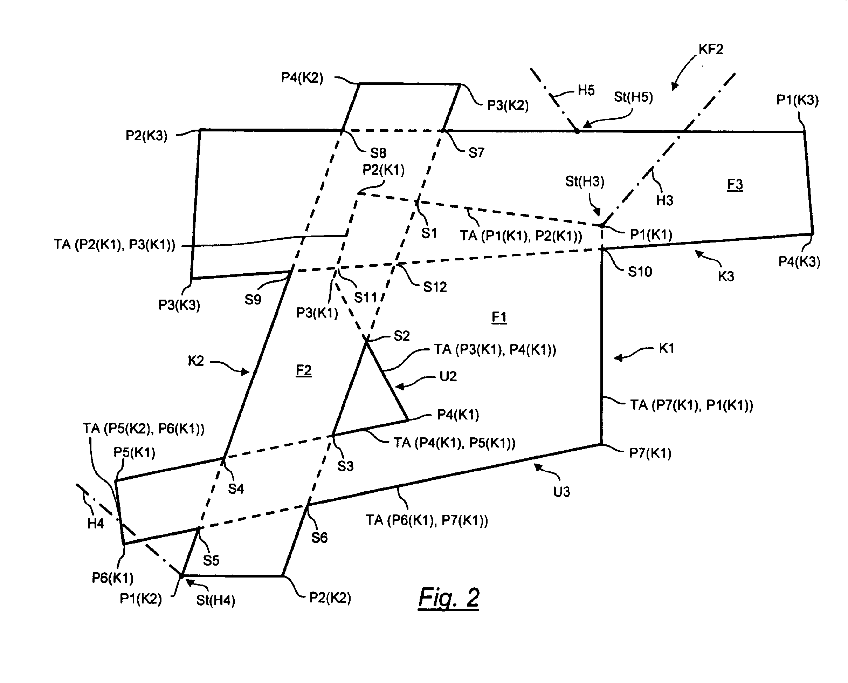

Fig. 2 zeigt einen gegenüber dem Korridor KF1 von Fig. 1 erweiterten Korridor KF2, der aus den Teilbereichen F1 und F2 des Korridors KF1 von Fig. 1 und einem dritten Teilbereich F3 gebildet wird. Der Teilbereich F3 ist ein Polygon mit einer Teilbereichsbegrenzung K3, die durch Verbindungsstrecken von Polygoneckpunkten P1 (K3), P2 (K3), P3 (K3) und P4 (K3) gegeben ist.

Für den Korridor KF2 soll wenigstens eine Korridorbegrenzung U ermittelt werden. Hierfür werden für jede der drei Teilbereichsbegrenzungen K1, K2 und K3 die Teilbereichsbegrenzungsabschnitte TA ermittelt, die sich zwischen Schnittpunkten mit jeder der beiden jeweils anderen Teilbereichsbegrenzungen K1, K2 und K3 ergeben. Dadurch erhält man die Teilbereichsbegrenzungsabschnitte TA der Teilbereichsbegrenzung K1, die sich aus dem Schnitt mit der Teilbereichsbegrenzung K2 ergeben und die Teilbereichsbegrenzungsabschnitte TA und der Teilbereichsbegrenzung K2, die sich aus dem Schnitt mit der Teilbereichsbegrenzung K1 ergeben, wie dies in der Beschreibung zu Fig. 1 beschrieben ist.

Auf gleiche Weise werden jedoch zusätzlich Teilbereichsbegrenzungsabschnitte TA ermittelt, die sich durch Schneiden der Teilbereichsbegrenzung K1 mit der Teilbereichsbegrenzung K3 in Schnittpunkten S11 und S10 für die Teilbereichsbegrenzungen K1 und K3 ergeben. Ferner erhält man auf gleiche Weise Teilbereichsbegrenzungsabschnitte TA sowohl für die Teilbereichsbegrenzung K2 als auch für die Teilbereichsbegrenzung K3, die sich durch Schneiden dieser Teilbereichsbegrenzungen K2 und K3 miteinander in Schnittpunkten S7, S8, S9 und S12 miteinander ergeben. Dabei sind die Schnittpunkte S11 und S10 neben dem Polygoneckpunkten P1 (K3) bis P4 (K3) Polygoneckpunkte der Teilbereichsbegrenzung K3 in Bezug auf die Teilbereichsbegrenzung K1. In Bezug auf die Teilbereichsbegrenzung K2 sind hingegen neben den Polygoneckpunkten P1 (K3) bis P4 (K3) die Schnittpunkte S7, S8, S9 und S 12 Polygoneckpunkte der Teilbereichsbegrenzung K3.

Für jeden Teilbereichsbegrenzungsabschnitt TA jeder Teilbereichsbegrenzung K1, K2 und K3 wird nun bestimmt, ob dieser Teilbereichsbegrenzungsabschnitt TA innerhalb oder außerhalb des Teilbereichs F1, F2, F3 liegt, der von der Teilbereichsbegrenzung K1, K2, K3 begrenzt wird, in Bezug auf welche die jeweiligen Teilbereichsbegrenzungsabschnitte TA ermittelt wurden. Dafür wird für einen Teilbereichsbegrenzungsabschnitt TA der Teilbereichsbegrenzung K2 eine Halbgerade H4 bestimmt, wie es in der Beschreibung zu Fig. 1 in Bezug auf die Halbgerade H2 beschrieben ist. Die Halbgerade H4 unterscheidet sich dadurch von der Halbgeraden H2, dass sie eine andere Richtung aufweist. Alternativ kann die Halbgerade H4 jedoch auch die gleiche Richtung wie die Halbgerade H2 aufweisen. Darüber hinaus wird die Halbgerade H4 sowohl für die Bestimmungen in Bezug auf einen Schnitt des Teilbereichs K2 mit dem Teilbereich K1 als auch für einen Schnitt des Teilbereichs K2 mit dem Teilbereich K3 verwendet. Alternativ können für diese unterschiedlichen Schnitte bzw. für die Bestimmungen der unterschiedlichen Teilbereichsbegrenzungsabschnitte TA des Teilbereichs K2 in Bezug auf diese unterschiedlichen Schnitte auch unterschiedliche Halbgeraden H herangezogen werden.

Die Halbgerade H4 schneidet die Teilbereichsbegrenzung K1 zweimal, so dass der Teilbereichsbegrenzungsabschnitt TA zwischen den Schnittpunkten S5 und S6 des Teilbereichs K2, der einen Startpunkt St (H4) von H4 der Halbgeraden H4 aufweist, als außerhalb des Teilbereichs F1 liegend bestimmt wird.

Mit dem Teilbereich F3 weist die Halbgerade H4 jedoch keinen Schnittpunkt auf. Aus diesem Grunde bzw. da auch hier somit keine ungerade Anzahl von Schnittpunkten ermittelt wurde, wird in Bezug auf den Schnitt der Teilbereichsbegrenzung H2 mit der Teilbereichsbegrenzung K3 der Teilbereichsbegrenzungsabschnitt der Teilbereichsbegrenzung K2 zwischen den Schnittpunkten S9 und S12 als außerhalb des Teilbereichs F3 liegend bestimmt. Durch abwechselnde Zuordnung der jeweiligen Teilbereichsbegrenzungsabschnitte TA als innerhalb oder außerhalb des jeweils anderen Teilbereichs liegend ergeben sich somit für die Teilbereichsbegrenzung K2 mehrere Teilbereichsbegrenzungsabschnitte TA, die für das spätere Bestimmen wenigstens einer Korridorbegrenzung verworfen werden können, da sie innerhalb eines der Teilbereiche F1 oder F3 liegen. Insbesondere liegen Teilbereichsbegrenzungsabschnitte TA der Teilbereichsbegrenzung K2 zwischen den Schnittpunkten S6 und S3, zwischen den Schnittpunkten S2 und S1 und zwischen Schnittpunkten S4 und S5 innerhalb des Teilbereichs F1. Ferner liegen Teilbereichsbegrenzungsabschnitte TA der Teilbereichsbegrenzung K2 zwischen den Schnittpunkten S12 und S7 sowie zwischen den Schnittpunkten S8 und S9 innerhalb des Teilbereichs F3. Diese Abschnitte werden verworfen. Dabei schadet es nicht, dass bspw. ein Abschnitt zwischen den Schnittpunkten S12 und S1 sowohl einem verworfenen Teilbereichsabschnitt TA zwischen den Schnittpunkten S2 und S1 als auch einem verworfenen Teilbereichsbegrenzungsabschnitt zwischen den Schnittpunkten S12 und S7 zugeordnet ist.

Auf analoge Weise werden zu verwerfende Teilbereichsbegrenzungsabschnitte TA der Teilbereichsbegrenzungen K1 und K3 in Bezug auf Schnitte mit den beiden jeweils anderen Teilbereichsbegrenzungen K2 und K3 bzw. K1 und K2 ermittelt. Dabei wird zum Bestimmen, welche Teilbereichsbegrenzungsabschnitte TA der Teilbereichsbegrenzung K1 innerhalb und welche außerhalb der beiden anderen Teilbereiche F2 und F3 liegen, eine Halbgerade H3, die von einem Startpunkt St (H3) ausgeht, bestimmt. Diese Halbgerade H3 weist keinen Schnittpunkt mit dem Teilbereich F2 auf, so dass der Teilbereichsbegrenzungsabschnitt TA der Teilbereichsbegrenzung K1 zwischen den Schnittpunkten S6 und S1 als außerhalb des Teilbereichs F2 liegend erkannt wird. In Bezug auf den Teilbereich F3 schneidet die Halbgerade H3 jedoch die Teilbereichsbegrenzung K3 einmal, mithin mit einer ungeraden Anzahl von Schnittpunkten. Der Teil-bereichsbegrenzungsabschnitt TA der Teilbereichsbegrenzung K1 zwischen den Schnittpunkten S10 und S11 wird daher als innerhalb des Teilbereichs F3 liegend bestimmt und deshalb später nicht zur Bildung der Korridorbegrenzung herangezogen.

TA Zum Zuordnen der Teilbereichsbegrenzungsabsrhnitte TA des Teilbereichs F3 als außerhalb oder innerhalb der Teilbereiche F1 und F2 liegend, wird schließlich noch eine Halbgerade H5 verwendet, die weder die Teilbereichsbegrenzung K1 noch die Teilbereichsbegrenzung K2 berührt. Daher wird der Teilbereichsbegrenzungsabschnitt TA der Teilbereichsbegrenzung K3 zwischen den Schnittpunkten S10 und S11, auf dem ein Startpunkt St (H5) der Halbgeraden H5 liegt, als außerhalb des Teilbereichs F1 liegend bestimmt. Zudem wird ein Teilbereichsbegrenzungsabschnitt TA zwischen den Schnittpunkten S12 und S7, auf dem ebenfalls dieser Startpunkt St (H5) liegt, als außerhalb des Teilbereichs F2 liegend bestimmt.

Der Startpunkt St (H5) ist in diesem Ausführungsbeispiel dabei im Gegensatz zu den Startpunkten St (H3) und St (H4) kein Polygoneckpunkt P des Teilbereichs F3, sondern ein anderer Punkt der Teilbereichsbegrenzung K3 zwischen dem Polygoneckpunkt P1 (K3) und dem Schnittpunkt S7.

Hiermit werden auf analoge Weise, wie für die Teilbereichsbegrenzung K2 beschrieben, die Teilbereichsbegrenzungsabschnitte TA der Teilbereichsbegrenzungen K1 und K3 als außerhalb oder innerhalb des jeweils anderen Teilbereichs liegend bestimmt. Insbesondere werden somit Teilbereichsbegrenzungsabschnitte TA zwischen den Schnittpunkten S1 und S2 sowie zwischen den Schnittpunkten S3 und S4 und zwischen den Schnittpunkten S5 und S6 der Teilbereichsbegrenzung K1 als innerhalb des Teilbereichs- F2 liegend bestimmt und verworfen. Ferner wird ein Teilbereichsbegrenzungsabschnitt TA zwischen den Schnittpunkten S10 und S11 der Teilbereichsbegrenzung K1 als innerhalb des Teilbereichs F3 liegend bestimmt und verworfen. Von der Teilbereichsbegrenzung K3 werden auf gleiche Weise Teilbereichsbegrenzungsabschnitte TA zwischen den Schnittpunkten S7 und S8, zwischen den Schnittpunkten S9 und S12 sowie zwischen den Schnittpunkten S11 und S10 als innerhalb des Teilbereichs F2 bzw. F1 liegend bestimmt und verworfen. Auch wird wieder ein Abschnitt der Teilbereichsbegrenzung K3, nämlich ein Abschnitt zwischen den Schnittpunkten S11 und S12 2-fach als zu verwerfender Abschnitt ermittelt, da er sowohl innerhalb des Teilbereichs F2 als auch innerhalb des Teilbereichs F1 liegt.

Nach alledem werden nur die Abschnitte der Teilbereichsbegrenzungen K1, K2 und K3 zum Bestimmen der Korridorbegrenzung U2 sowie einer Korridorbegrenzung U3 herangezogen, die nicht wenigstens einmal verworfen wurden. Daher werden die Teilbereichsbegrenzungsabschnitte TA bzw. Abschnitte der Teilbereichsbegrenzung K verwendet, die außerhalb jedes jeweils anderen Teilbereichs bzw. in keinem anderen Teilbereich liegen. Dies sind die Abschnitte, die in der Fig. 2 als durchgezogene Linien dargestellt sind. Der Korridor KF2 wird dabei durch die Korridorbegrenzung U3 gegenüber einer Umgebung abgegrenzt. Die Korridorbegrenzung U2 kennzeichnet hingegen einen im Inneren des Korridors KF2 liegenden verbotenen Aufenthaltsbereich, wie dies bereits zur Fig. 1 beschrieben ist.

Auf gleiche Weise kann wenigstens eine Korridorbegrenzung U für mehr als drei Teilbereiche F berechnet werden. Entscheidende ist, dass alle Schnitte jeder Teilbereichsbegrenzung K mit jeder anderen Teilbereichsbegrenzung K berücksichtigt werden. Dabei kann ggf. auf Vorwissen zurückgegriffen werden, wenn bspw. bekannt ist, dass es keine Überlappung zwischen einem Teilbereich F und wenigstens einem anderen Teilbereich F gibt.

Im Falle einer Änderung des Korridors durch Hinzunehmen oder Wegnehmen wenigstens eines Teilbereichs brauchen die Teilbereichsbegrenzungsabschnitte einer Teilbereichsbegrenzung, die in Bezug auf Teilbereichsbegrenzungen weiterhin vorhandener Teilbereiche zu verwerfen sind, nicht neu berechnet zu werden. Insbesondere sind beim Wegfall wenigstens eines Teilbereichs keine derartigen Neuberechnungen durchzuführen. Vielmehr muss in diesem Fall lediglich die Korridorbegrenzung aus den nun noch zu verwendenden Abschnitten der noch vorliegenden Teilbereichsbegrenzungen neu bestimmt werden. Im Falle der Hinzunahme eines Teilbereichs müssen lediglich die Teilbereichsbegrenzungsabschnitte dieses zusätzlichen Teilbereichs in Bezug auf jede vorhandene Teilbereichsbegrenzung sowie die Teilbereichsbegrenzungsabschnitte jedes vorhandenen Teilbereichs in Bezug auf diese neue Teilbereichsbegrenzung neu bestimmt werden.

Dieses Vorgehen lässt sich anhand einer Matrix veranschaulichen, in der jedem Teilbereich sowohl eine Zeile als auch eine Spalte zugeordnet ist. Da ein Teilbereich nicht mit sich selbst geschnitten wird, bleiben Positionen in dieser Matrix, die gleichen Zeilennummern und Spaltennummern zugeordnet sind, ohne Eintrag. Alle anderen Positionen dieser Matrix bezeichnen hingegen die Schnitte der Teilbereiche miteinander. Abstrakt formuliert, ist an jeder Position der Matrix eine Menge der Intervalle des Definitionsbereichs eingetragen, die aufgrund des Schneidens eines Teilbereichs gemäß der Zeilennummer der Matrix mit einem Teilbereich gemäß der Spaltennummer der Matrix aus dem Definitionsbereich der Teilbereichsbegrenzung gemäß der Zeilennummer der Matrix herausgeschnitten werden muss, um den Beitrag von dieser Teilbereichsbegrenzung zur gesamten Umhüllenden bzw. zur Korridorbegrenzung zu beschreiben. An jeder Position der Matrix stehen somit zu verwerfende Abschnitte von Teilbereichsbegrenzungen bzw. zu verwerfende Teilbereichsbegrenzungsabschnitte. Unter Berücksichtigung aller Einträge der Matrix erhält man somit aus allen Teilbereichsbegrenzungen abzüglich aller gemäß dieser Matrix zu verwerfenden Abschnitte die wenigstens eine Korridorbegrenzung. Nach Wegfall einzelner Teilbereiche müssen lediglich die entsprechenden Spalten und Zeilen der Matrix entfernt werden. Nach einer Vergrößerung eines zulässigen Aufenthaltsbereichs bzw. eines Korridors durch Hinzunahme wenigstens eines Teilbereichs muss für diesen Teilbereich lediglich eine Spalte und eine Zeile in der Matrix vorgesehen werden. Neue Berechnungen zu verwerfender Abschnitte bzw. Teilbereichsbegrenzungsabschnitte müssen lediglich für noch offene Positionen in der Matrix durchgeführt werden. Somit kann mit geringem Rechenaufwand eine Verschiebung des Korridors durchgeführt werden.

Zurückkommend auf das Ausführungsbeispiel gemäß Fig. 2, reduziert sich das Bestimmen der Korridorbegrenzungen U2 und U3 des Korridors KF2 mittels der Erfindung auf die Anwendung eines relativ simplen Intervallkalküls. Die Korridorbegrenzungen U2 und U3 können somit mit geringem Rechenaufwand berechnet und auf einem Display bzw. Monitor angezeigt werden. Richtungsänderungen zwischen Teilbereichen TA des Korridors KF können somit auf simple Weise realisiert werden, ohne dass es zu einem Umklappen von zulässigen Aufenthaltsbereichen kommt bzw. dazu kommt, dass sich ein Wasserfahrzeug plötzlich ohne Positionsänderung in einem unzulässigen Aufenthaltsbereich befindet und einen Fehlalarm auslöst.

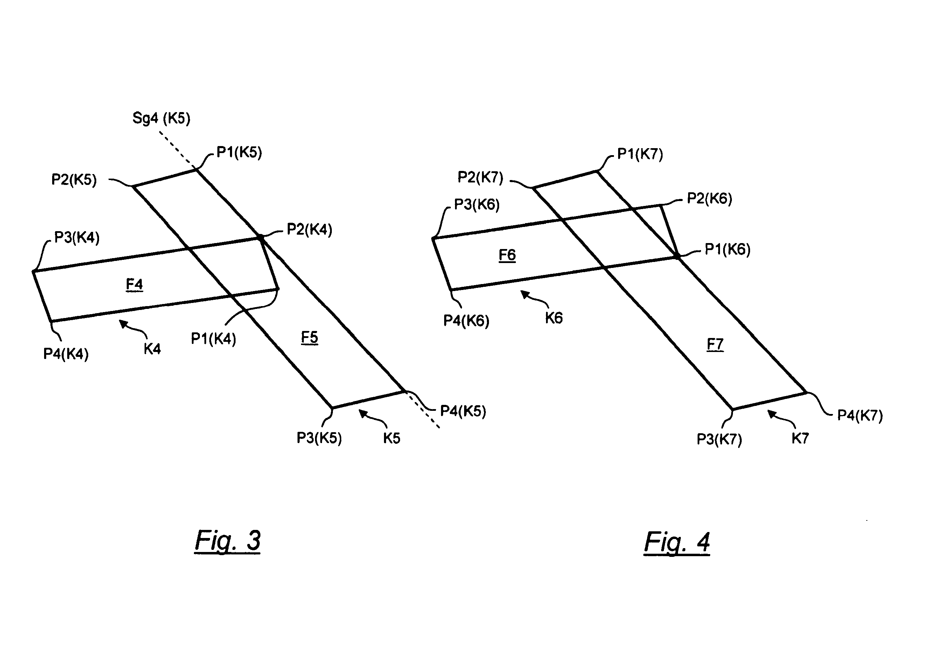

Fig. 3 zeigt zwei sich teilweise überlappende und berührende Teilbereiche F4 und F5 gemäß einem zweiten Ausführungsbeispiel. Ein Polygoneckpunkt P1 (K4) als Anfangspunkt einer Teilbereichsbegrenzung K4 des Teilbereichs F4 liegt zwar nicht auf einer Seitengeraden des Teilbereichs F5. Jedoch liegt ein Polygoneckpunkt P2 (K4) auf einer Seitengeraden des Teilbereichs F5, nämlich auf einer hier beispielhaft erstmals eingezeichneten und bezeichneten Seite bzw. Seitengeraden S6, insbesondere Sg4 (K5), welche durch eine Verlängerung des Vektors zwischen Polygoneckpunkten P4 (K5) und P1 (K5) einer Teilbereichsbegrenzung K5 des Teilbereichs F5 gebildet wird. Erfindungsgemäß wird deshalb mittels des Korrekturalgorithmus A3 vor einer Bestimmung der für eine Korridorbegrenzung heranzuziehenden Teilbereichsbegrenzungsabschnitte TA der Teilbereichsbegrenzungen K4 und K5 zunächst der Teilbereich F4 und/oder der Teilbereich F5 verschoben. Dadurch wird verhindert, dass sich die Teilbereiche F4 und F5 im Polygoneckpunkt P2 (K4) berühren.

Fig. 4 zeigt zwei Teilbereiche F6 und F7 gemäß einem dritten Ausführungsbeispiel. Diese Teilbereiche F6 und F7 berühren sich in einem Anfangspunkt P1 (K6) des Teilbereichs F6. Insbesondere unterschreitet dieser Anfangspunkt P1 (K6) einen erforderlichen Mindestabstand, der für den Anfangspunkt relativ zu jeder Seitengeraden Sg des Teilbereichs F7 vorgegeben ist. Mittels des Korrekturalgorithmus A3 wird deshalb der Teilbereich F6 oder Teilbereich F7 oder es werden beide Teilbereiche F6 und F7 verschoben, so dass der Anfangspunkt P1 (K6) den erforderlichen Mindestabstand zur Seitengeraden Sg, auf der die Polygoneckpunkte P4 (K7) und P1 (K7) liegen, erreicht oder überschreitet. Ggf. erfolgt diese Verschiebung sukzessive in kleinen Schritten.

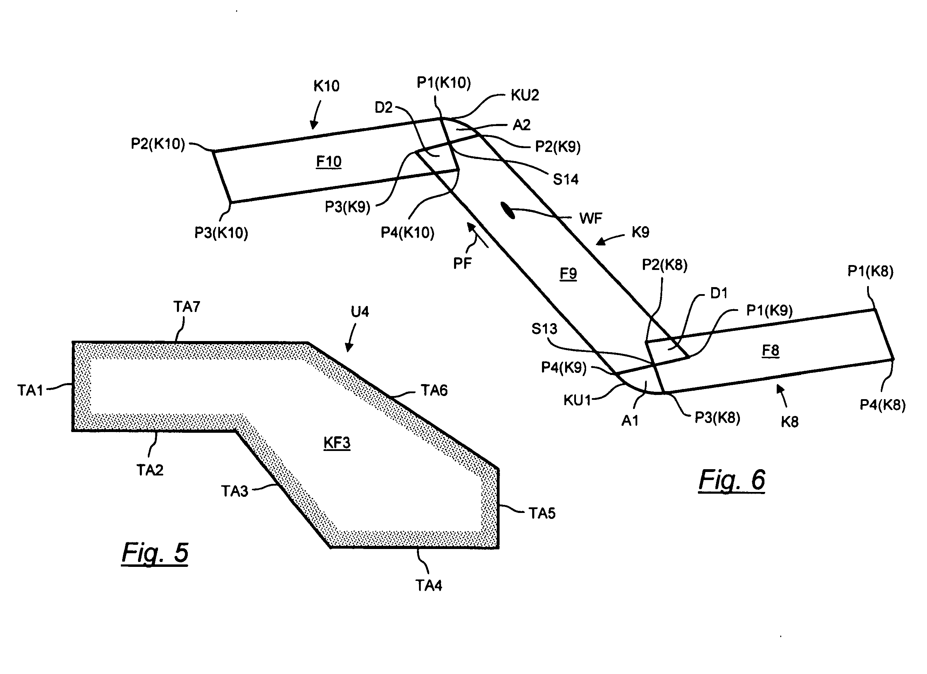

Fig. 5 zeigt eine graphische Darstellung einer Korridorbegrenzung U4. Diese Korridorbegrenzung U4 ist die erfindungsgemäß bestimmte Umhüllende eines Korridors KF3, der einen zulässigen Aufenthaltsbereich definiert und in der graphischen Darstellung des Korridors KF3 eindeutig erkennbar sein soll. Die Korridorbegrenzung U4 umfasst mehrere Teilbereichsbegrenzungsabschnitte TA1 bis TA7, die mehr als einer Teilbereichsbegrenzung bzw. mehr als einem Teilbereich F angehören. Der Korridor KF3 kann deshalb nicht durch einfaches Ausfüllen einer Fläche, die von den Teilbereichsbegrenzungsabschnitten TA1 bis TA7 eingeschlossen wird, graphisch gegenüber der Umgebung hervorgehoben werden. Allerdings wird jeder Teilbereichsbegrenzungsabschnitt TA1 bis TA7 durch einen Vektor dargestellt, der somit eine linke und eine rechte Seite aufweist, wobei bekannt ist, welche Seite dem Korridor KF3 und welche Seite der Umgebung bzw. einem verbotenen Aufenthaltsbereich zugewandt ist. Der Korridor KF3 wird deshalb in diesem Ausführungsbeispiel dadurch optisch hervorgehoben, dass alle in dem Korridor KF3 zugewandten Seiten der Teilbereichsbegrenzungsabschnitte TA1 bis TA7 an einen Bereich angrenzen, der hier durch eine Vielzahl von Punkten dargestellt ist. Alternativ können bspw. Striche vorgesehen sein, die bspw. radial von dem jeweiligen Teilbereichsbegrenzungsabschnitt TA1 bis TA7 abweisen und vorzugsweise eine einheitliche Länge aufweisen. In Alternative zu diesem Ausführungsbeispiel kann alternativ oder zusätzlich ein dem Korridor KF3 abgewandter Bereich neben den Teilbereichsbegrenzungsabschnitt TA1 bis TA7 durch ein derartiges Muster kenntlich gemacht werden. Alternativ oder zusätzlich zu einem Muster kann auch ein farblich gegenüber der Umgebung abgegrenzter Bereich vorgesehen sein.

Fig. 6 zeigt drei Teilbereiche F8, F9 und F10, die zur Bildung eines Korridors durch Bestimmung einer Korridorbegrenzung U auf die erfindungsgemäße Weise gemäß einem fünften Ausführungsbeispiel der Erfindung vorgesehen sind. Die Teilbereiche F8 und F9 sowie die Teilbereiche F9 und F10 überlappen sich jeweils teilweise in Überlappungsbereichen D1 und D2. Diese Überlappungsbereiche D1 und D2 werden von Teilbereichsbegrenzungsabschnitten TA von Teilbereichsbegrenzungen K der Teilbereiche F9 und F8 bzw. F9 und F10 begrenzt, die sich innerhalb des jeweils anderen Teilbereichs F befinden und deshalb verworfen werden. Insbesondere stellen diese im Inneren eines anderen Teilbereichs F liegenden Teilbereichsbegrenzungsabschnitte TA keinen Übergang zwischen einem erlaubten und einem unerlaubten Aufenthaltsbereich für ein Objekt, wie das beispielhaft dargestellte Wasserfahrzeug WF dar. Dieses Wasserfahrzeug WF darf sich lediglich innerhalb eines mittels der Teilbereiche F8, F9 und F10 zu bestimmenden Korridors aufhalten bzw. bewegen. Eine beispielhafte Bewegungsrichtung für das Wasserfahrzeug WF ist durch einen Pfeil PF angedeutet.

Teilbereichsbegrenzungen K8, K9 und K10 der Teilbereiche F8, F9 und F10 sind durch Polygoneckpunkte P1 (K8) bis P4 (K8), P1 (K9) bis P4 (K9) und P1 (K10) bis P4 (K10) von einer Leitstelle, bspw. einer Marineführungsstelle, vorgegeben. In Bereichen, wo sich die Teilbereiche F8 und F9 bzw. F9 und F10 schneiden ist der zu bestimmende Korridor um Übergangsbereiche A1 und A2 erweitert. Durch diese Übergangsbereiche wird der Verlauf einer Korridorbegrenzung U geglättet. Insbesondere werden zum Glätten der Korridorbegrenzung Kurven KU1 und KU2 eingefügt, welche die Polygoneckpunkte P3 (K8) und P4 (K9) bzw. P2 (K9) und P1 (K10) miteinander verbinden. Abschnitte der jeweiligen Teilbereichsbegrenzungen zwischen einem Schnittpunkt S13 und dem Polygoneckpunkt P3 (K8), zwischen dem Polygoneckpunkt P4 (K9) und dem Schnittpunkt S13, zwischen dem Polygoneckpunkt P2 (K9) und einem Schnittpunkt S14 sowie zwischen diesem Schnittpunkt S14 und dem Polygoneckpunkt P1 (K10) stellen hiernach keinen Übergang mehr zwischen dem zu bestimmenden Korridor U und der Umgebung dar und werden daher verworfen bzw. für eine spätere Anzeige des zu bestimmenden Korridors nicht angezeigt.

Durch die Möglichkeit des Glättens der zu bestimmenden Korridorbegrenzung mittels der Kurven KU1 und KU2 vereinfacht sich das Bestimmen vorzugebender Polygoneckpunkte P durch die Leitstelle, da diese Polygoneckpunkte P mit vergleichsweise geringerer Genauigkeit vorgegeben werden müssen.

## Patentansprüche

1. Verfahren zum Bestimmen wenigstens einer Korridorbegrenzung (U), die wenigstens einen Korridor (KF), insbesondere Seeweg, der einen, insbesondere zulässigen, Aufenthaltsbereich für ein Fahrzeug festlegt, von wenigstens einem, insbesondere unzulässigen, Umgebungsbereich trennt, wobei der Korridor (KF) mehrere sich gegenseitig zumindest paarweise teilweise überlappende Teilbereiche (F) umfasst und wobei die Korridorbegrenzung (U) Teilbereichsbegrenzungsabschnitte (TA) von diese Teilbereiche (F) begrenzenden Teilbereichsbegrenzungen (K) aufweist,
**gekennzeichnet durch**
folgende Verfahrensschritte zum Bestimmen der Korridorbegrenzung (U):
1.1) Ermitteln wenigstens eines Schnitts (S), insbesondere wenigstens zweier Schnittpunkte, jeweils wenigstens einer Teilbereichsbegrenzung (K) wenigstens eines Teilbereichs (F) mit jeweils wenigstens einer anderen Teilbereichsbegrenzung (K) wenigstens eines anderen Teilbereichs (F),
1.2) Bestimmen der vom jeweiligen Schnitt (S), insbesondere von den Schnittpunkten, begrenzten Abschnitte der jeweiligen Teilbereichsbegrenzung (K) als die jeweiligen Teilbereichsbegrenzungsabschnitte (TA) sowie in dem Fall, dass für wenigstens eine Teilbereichsbegrenzung (K) kein Schnitt (S) ermittelt wurde, Bestimmen dieser jeweiligen Teilbereichsbegrenzung (K) als jeweiligen Teilbereichsbegrenzungsabschnitt (TA),
1.3) Ermitteln, ob diese jeweiligen Teilbereichsbegrenzungsabschnitte (TA) außerhalb oder innerhalb des jeweils anderen Teilbereichs (F) liegen, und
1.4) Bestimmen der Korridorbegrenzung (U) aus den außerhalb jedes jeweils anderen Teilbereichs (F) liegenden Abschnitten dieser als außerhalb wenigstens eines jeweils anderen Teilbereichs (F) liegend ermittelten Teilbereichsbegrenzungsabschnitte (TA),
1.5) wobei
a) für jeden Teilbereich (F) des Korridors (KF) in Bezug auf jeden mit diesem jeweiligen Teilbereich (F) überlappenden Teilbereich (F) des Korridors (KF) zu verwerfende Teilbereichsbegrenzungsabschnitte (TA) der Teilbereichsbegrenzung (K) dieses jeweiligen Teilbereichs (F) berechnet werden,
b) eine Änderung des Korridors (KF) **durch** Wegnehmen wenigstens eines Teilbereichs (F) von den bereits vor dieser Änderung vom Korridor (KF) umfassten Teilbereichen (F) erfolgt, wobei die in Bezug auf Teilbereiche (F), die nach dieser Änderung weiterhin vom Korridor (KF) umfasst sind, zu verwerfenden Teilbereichsbegrenzungsabschnitte (TA) der Teilbereichsbegrenzungen (K) nicht neu berechnet werden, und
c) die Korridorbegrenzung (U) aus den Teilbereichsbegrenzungen (K) aller nach dieser Änderung weiterhin vom Korridor (KF) umfassten Teilbereiche (F) des Korridors (KF) abzüglich aller wenigstens einmal zu verwerfenden Abschnitte aller dieser Teilbereichsbegrenzungen (K) erhalten und auf einem Anzeigegerät angezeigt wird.

2. Verfahren nach Anspruch 1,
**dadurch gekennzeichnet, dass**
die Teilbereichsbegrenzung (K) jedes Teilbereichs (F) sich jeweils selbst nicht schneidet und der Verfahrensschritt 1.3) folgende Verfahrensschritte aufweist:
2.1) Bestimmen für jeweils wenigstens einen vom Schnitt (S), insbesondere von den Schnittpunkten, begrenzten Teilbereichsbegrenzungsabschnitt (TA), ob dieser Teilbereichsbegrenzungsabschnitt (TA) außerhalb oder innerhalb des jeweils anderen Teilbereichs (F) liegt, und
2.2) Bestimmen jeweils weiterer, insbesondere aller weiteren, vom Schnitt (S) begrenzten Teilbereichsbegrenzungsabschnitte (TA) ausgehend von diesem als außerhalb oder innerhalb des jeweils anderen Teilbereichs (F) liegend bestimmten Teilbereichsbegrenzungsabschnitt (TA) abwechselnd als außerhalb oder innerhalb des jeweils anderen Teilbereichs (F) liegend

3. Verfahren nach Anspruch 1 oder 2,
**dadurch gekennzeichnet, dass**
der Verfahrensschritt 1.3) folgende Verfahrensschritte aufweist:
3.1) Bestimmen einer von einem Startpunkt (St) ausgehenden Halbgeraden (H) als Teil einer einen Teilbereichsbegrenzungsabschnitt (TA) der Teilbereichsbegrenzung (K) schneidenden Geraden, wobei der Schnittpunkt dieser Geraden mit der Teilbereichsbegrenzung (K) der Startpunkt (St) der Halbgeraden (H) ist,
3.2) Ermitteln der Anzahl von Schnittpunkten dieser Halbgeraden (H) mit der jeweils anderen Teilbereichsbegrenzung (K) und
3.3) Bestimmen dieses Teilbereichsbegrenzungsabschnitts (TA) als außerhalb des jeweils anderen Teilbereichs (F) liegend in dem Fall, dass die Anzahl von Schnittpunkten gerade oder null ist, und als innerhalb des jeweils anderen Teilbereichs (F) liegend in dem Fall, dass die Anzahl dieser Schnittpunkte ungerade ist.

4. Verfahren nach Anspruch 3,
**dadurch gekennzeichnet, dass**
der Verfahrensschritt 3.1) folgende Verfahrensschritte aufweist:
4.1) Ermitteln, ob ein als Startpunkt (St) einer Halbgeraden gewählter Punkt der Teilbereichsbegrenzung (K) auf der jeweils anderen Teilbereichsbegrenzung (K) liegt, und
4.2) Bestimmen eines anderen Punktes der Teilbereichsbegrenzung (K) als Startpunkt (St) in dem Fall, dass ermittelt wurde, dass dieser gewählte Punkt auf der jeweils anderen Teilbereichsbegrenzung (K) liegt.

5. Verfahren nach Anspruch 3 oder 4,
**dadurch gekennzeichnet, dass**
die Teilbereichsbegrenzung (K) jedes Teilbereichs (F) jeweils ein geschlossenes Polygon oder Polyeder ist und durch in Koordinatenform vorliegende Eckpunkte (P), insbesondere Polygoneckpunkte oder Polyedereckpunkte, gegeben ist, die auf Seiten (Sg), insbesondere Seitengeraden oder Seitenflächen, des Teilbereichs liegen und
der Verfahrensschritt 3.1. folgenden Verfahrensschritt aufweist:
5.1) Bestimmen einer Richtung der Halbgeraden (H) derart, dass diese Richtung, insbesondere möglichst stark, vorzugsweise maximal, von den Richtungen sämtlicher Seiten (Sg) der Teilbereiche (F) abweicht.

6. Verfahren nach einem der vorherigen Ansprüche,
**dadurch gekennzeichnet, dass**
dem Verfahrensschritt 1.1) folgende Verfahrensschritte vorausgehen:
6.1) Ermitteln, ob sich die Teilbereichsbegrenzungen (K) in wenigstens einem Punkt eines der Teilbereiche (F), der insbesondere kein Schnittpunkt (S) dieser Teilbereichsbegrenzungen (K) miteinander ist, berühren, und
6.2) Verschieben von wenigstens einem der Teilbereiche (F) gegenüber dem jeweils anderen Teilbereich (F) in dem Fall, dass ermittelt wurde, dass sich die Teilbereichsbegrenzungen (K) in diesem Punkt berühren, bis sich diese Teilbereichsbegrenzungen (K) nicht mehr berühren.

7. Verfahren nach Anspruch 6,
**dadurch gekennzeichnet, dass**
die Teilbereichsbegrenzung (K) jedes Teilbereichs (F) jeweils ein geschlossenes Polygon oder Polyeder ist und durch in Koordinatenform vorliegende Eckpunkte (P), insbesondere Polygoneckpunkte oder Polyedereckpunkte, gegeben ist, die auf Seiten (Sg), insbesondere Seitengeraden oder Seitenflächen, des Teilbereichs liegen, und der Verfahrensschritt 6.2) die folgenden Verfahrensschritte aufweist:
7.1) Bestimmen eines Verschiebungsvektors zum Verschieben des jeweiligen Teilbereichs (TA) derart, dass die Richtung des Verschiebungsvektors von den Richtungen sämtlicher Seiten (Sg) des jeweils anderen Teilbereichs F, bevorzugt möglichst weitgehend, insbesondere maximal, abweicht, und
7.2) Verschieben der Koordinaten der Eckpunkte (P) des Teilbereichs (TA) gemäß diesem Verschiebungsvektor.

8. Verfahren nach einem der Ansprüche 4 oder 5,
**dadurch gekennzeichnet, dass**
die Teilbereichsbegrenzung (K) jedes Teilbereichs (F) jeweils ein geschlossenes Polygon oder Polyeder ist und durch in Koordinatenform vorliegende Eckpunkte (P), insbesondere Polygoneckpunkte oder Polyedereckpunkte, gegeben ist, die auf Seiten (Sg), insbesondere Seitengeraden oder Seitenflächen, des Teilbereichs liegen, und die Verfahrensschritte 4.1) folgende Verfahrensschritte aufweisen:
8.1) Bestimmen des Abstands des Punkts (St, P) zu jeder einen Teilbereichsbegrenzungsabschnitt (TA) der jeweils anderen Teilbereichsbegrenzung (K) aufweisenden Seite (Sg) und
8.2) Bestimmen des Punkts (St, P) als auf dem jeweiligen anderen Teilbereichsbegrenzungsabschnitt (TA) liegend und/oder Bestimmen des diesen Punkt (St, P) aufweisenden Teilbereichsbegrenzungsabschnitts (TA) als diesen anderen Teilbereichsbegrenzungsabschnitt (TA) berührend, wenn der bestimmte Abstand zu der diesen anderen Teilbereichsbegrenzungsabschnitt (TA) aufweisenden Seitengeraden (Sg) kleiner als ein vorgegebener Höchstabstand ist.

9. Verfahren nach einem der Ansprüche 6 oder 7,
**dadurch gekennzeichnet, dass**
die Teilbereichsbegrenzung (K) jedes Teilbereichs (F) jeweils ein geschlossenes Polygon oder Polyeder ist und durch in Koordinatenform vorliegende Eckpunkte (P), insbesondere Polygoneckpunkte oder Polyedereckpunkte, gegeben ist, die auf Seiten (Sg), insbesondere Seitengeraden oder Seitenftächen, des Teilbereichs liegen, und die Verfahrensschritte 4.1) und/oder 6.1) folgende Verfahrensschritte aufweisen:
9.1) Bestimmen des Abstands des Punkts (St, P) zu jeder einen Teilbereichsbegrenzungsabschnitt (TA) der jeweils anderen Teilbereichsbegrenzung (K) aufweisenden Seite (Sg) und
9.2) Bestimmen des Punkts (St, P) als auf dem jeweiligen anderen Teilbereichsbegrenzungsabschnitt (TA) liegend und/oder Bestimmen des diesen Punkt (St, P) aufweisenden Teilbereichsbegrenzungsabschnitts (TA) als diesen anderen Teilbereichsbegrenzungsabschnitt (TA) berührend, wenn der bestimmte Abstand zu der diesen anderen Teilbereichsbegrenzungsabschnitt (TA) aufweisenden Seitengeraden (Sg) kleiner als ein vorgegebener Htichstabstand ist.

10. Verfahren nach einem der vorherigen Ansprüche für den Fall, dass der Korridor zwei Dimensionen aufweist und die Schnitte (S) Schnittpunkte sind,
**dadurch gekennzeichnet, dass**
der Verfahrensschritt 1.1) folgende Verfahrensschritte aufweist:
10.1) Ermitteln der Ursprungskoordinaten dieser Schnittpunkte (S) und
10.2) Sortieren dieser Ursprungskoordinaten in aufsteigender Reihenfolge gemäß der Reihung dieser Schnittpunkte (S) auf der jeweiligen Teilbereichsbegrenzung (K), und der Verfahrensschritt 1.2) folgenden Verfahrensschritt aufweist:
10.3) Bestimmen der jeweiligen Teilbereichsbegrenzungsabschnitte (TA) als Folge von Abschnitten zwischen Paaren von gemäß der Sortierung aufeinanderfolgenden Ursprungskoordinaten, wobei der Endpunkt (P) des letzten Teilbereichsbegrenzungsabschnitts (TA) der jeweiligen Teilbereichsbegrenzung (K) zugleich der Anfangspunkt (P) des ersten Teilbereichsbegrenzungsabschnitts (TA) dieser Teilbereichsbegrenzung (K) ist und der Endpunkt (P) jedes anderen Teilbereichsbegrenzungsabschnitts (TA) dieser Teilbereichsbegrenzung (K) zugleich der Anfangspunkt (P) des jeweils folgenden Teilbereichsbegrenzungsabschnitts (TA) dieser Teilbereichsbegrenzung (K) ist.

11. Verfahren nach einem der vorherigen Ansprüche,
**dadurch gekennzeichnet, dass**
die Korridorbegrenzung (U) oder ein zweidimensionales Abbild der Korridorbegrenzung (U) auf einem graphischen Anzeigenmittel, insbesondere Display oder Monitor, graphisch dargestellt wird.

12. Vorrichtung zum Bestimmen wenigstens einer Korridorbegrenzung (U), die wenigstens einen Korridor (KF), insbesondere Seeweg, der einen, insbesondere zulässigen, Aufenthaltsbereich für ein Fahrzeug festlegt, von wenigstens einem, insbesondere unzulässigen, Umgebungsbereich trennt, wobei der Korridor (KF) mehrere sich gegenseitig zumindest paarweise teilweise überlappende Teilbereiche (F) umfasst und wobei die Korridorbegrenzung (U) Teilbereichsbegrenzungsabschnitte (TA) von diese Teilbereiche (F) begrenzenden Teilbereichsbegrenzungen (K) aufweist,
**gekennzeichnet durch**
folgende Mittel zum Bestimmen der Korridorbegrenzung (U):
12.1) Schnittermittlungsmittel zum Ermitteln wenigstens eines Schnitts (S), insbesondere wenigstens zweier Schnittpunkte, jeweils wenigstens einer Teilbereichsbegrenzung (K) wenigstens eines Teilbereichs (F) mit jeweils wenigstens einer anderen Teilbereichsbegrenzung (K) wenigstens eines anderen Teilbereichs (F),
12.2) Abschnittbestimmungsmittel zum Bestimmen der vom jeweiligen Schnitt (S), insbesondere von den Schnittpunkten, begrenzten Abschnitte der jeweiligen Teilbereichsbegrenzung (K) als die jeweiligen Teilbereichsbegrenzungsabschnitte (TA) sowie in dem Fall, dass für wenigstens eine Teilbereichsbegrenzung (K) kein Schnitt (S) ermittelt wurde, zum Bestimmen dieser jeweiligen Teilbereichsbegrenzung (K) als jeweiligen Teilbereichsbegrenzungsabschnitt (TA),
12.3) Ortermittlungsmittel zum Ermitteln, ob die jeweiligen Teilbereichsbegrenzungsabschnitte (TA) außerhalb oder innerhalb des jeweils anderen Teilbereichs (F) liegen, und
12.4) Korridorbegrenzungsbestimmungsmittel zum Bestimmen der Korridorbegrenzung (U) aus den außerhalb jedes jeweils anderen Teilbereichs (F) liegenden Abschnitten dieser als außerhalb wenigstens eines jeweils anderen Teilbereichs (F) liegend ermittelten Teilbereichsbegrenzungsabschnitte (TA).
und weiter **gekennzeichnet durch**
12.5) eine Ausbildung der Vorrichtung derart, dass
a) für jeden Teilbereich (F) des Korridors (KF) in Bezug auf jeden mit diesem jeweiligen Teilbereich (F) überlappenden Teilbereich (F) des Korridors (KF) zu verwerfende Teilbereichsbegrenzungsabschnitte (TA) der Teilbereichsbegrenzung (K) dieses jeweiligen Teilbereichs (F) berechnet werden,
b) eine Änderung des Korridors (KF) **durch** Wegnehmen wenigstens eines Teilbereichs (F) von den bereits vor dieser Änderung vom Korridor (KF) umfassten Teilbereichen (F) erfolgen kann, wobei die in Bezug auf Teilbereiche (F), die nach dieser Änderung weiterhin vom Korridor (KF) umfasst sind, zu verwerfenden Teilbereichsbegrenzungsabschnitte (TA) der Teilbereichsbegrenzungen (K) nicht neu berechnet werden, und
c) die Korridorbegrenzung (U) aus den Teilbereichsbegrenzungen (K) aller nach dieser Änderung weiterhin vom Korridor (KF) umfassten Teilbereiche (F) des Korridors (KF) abzüglich aller wenigstens einmal zu verwerfenden Abschnitte aller dieser Teilbereichsbegrenzungen (K) erhalten und auf einem Anzeigegerät angezeigt wird.

13. Vorrichtung nach Anspruch 12,
**gekennzeichnet durch**
Mittel zum Durchführen der Verfahrensschritte nach einem der Ansprüche 2 bis 9.

14. Vorrichtung nach Anspruch 12 oder 13,
**gekennzeichnet durch**
ein graphisches Anzeigemittel, insbesondere Display oder Monitor, auf dem die Korridorbegrenzung (U) oder ein zweidimensionales Abbild der Korridorbegrenzung (U) graphisch darstellbar ist.

15. Computerprogramm, das Computerprogrammcodemittel umfasst, die für die Ausführung des Verfahrens nach einem der Ansprüche 1 bis 10 geeignet sind, wenn dieses Computerprogramm auf einem Computer ausgeführt wird.

## Claims

1. A method for determining at least one corridor boundary (U) that separates at least one corridor (KF), in particular a sea route, that sets an in particular admissible sojourn area for a vehicle, from at least one, in particular inadmissible surrounding area, whereby the corridor (KF) comprises several partial areas (F) that overlap each other at least partially in pairs, and whereby the corridor boundary (U) comprises partial area boundary sections (TA) of partial area boundaries (K) limiting these partial areas (F),
**characterized by**
the following method steps for determining the corridor boundary (U):
1.1) Determining at least one section (S), in particular at least two section points of at least one partial area boundary (K) of at least one partial area (F) with at least one other partial area boundary (K) of at least one other partial area (F),
1.2) Determining the sections of the particular partial area boundary (K), which sections are limited by the particular section (S), in particular by the section points, as the particular partial area boundary sections (TA), as well as in the case that no section (S) was determined for at least one partial area boundary (K), determining this particular partial area boundary (K) as a partial area boundary section (TA),
1.3) Determining whether these particular partial area boundary sections (TA) are located outside of or inside of the particular other partial area (F), and
1.4) Determining the corridor boundary (U) from the sections, located outside of each particular other partial area (F), of these determined partial area boundary sections (TA) located outside of at least one particular other partial area (F),
1.5) whereby
a) For each partial area (F) of the corridor (KF) relative to each partial area (F) of the corridor (KF), which partial area overlaps with this particular partial area (F), partial area boundary sections (TA) of the partial area boundary (K) of this particular partial area (F) that are to be rejected are calculated,
b) A change of the corridor (KF) takes place by removing at least one partial area (F) from the partial areas (F) already comprised before this change from the corridor (KF), whereby the partial area boundary sections (TA) of the partial area boundaries (K) to be rejected are not recalculated relative to partial areas (F) that continue to be comprised by the corridor (KF) after this change, and
c) The corridor boundary (U) from the partial area boundaries (K) of all partial areas (F) of the corridor (KF), which partial areas continue to be comprised by the corridor (KF) after this change, minus all section of all these partial area boundaries (K), which sections are to be rejected at least once, is obtained and displayed on a display device.

2. The method according to claim 1,
**characterized in that**
the partial area boundary (K) of each partial area (F) does not intersect itself and that the method step 1.3) has the following method steps:
2.1 Determining for at least one partial area boundary section (TA) limited by the section (S), in particular by the section points, whether this partial area boundary section (TA) lies outside or inside the particular other partial area (F), and
2.2) Determining other, in particular all other partial area boundary sections (TA) limited by the section (S) starting from this partial area boundary section (TA) determined as lying outside or inside the particular other partial area (F)alternately located outside or inside the particular other partial area (F).

3. The method according to claim 1 or 2,
**characterized in that**
the method step 1.3) has the following method steps:
3.1) Determining a half line (H) starting from a starting point (St) as part of a straight line intersecting a partial area boundary section (TA) of the partial area boundary (K), whereby the intersection point of this straight line with the partial area boundary (K) is the starting point (St) of the half line (H),
3.2) Determining the number of intersection points of this half line (H) with the particular other partial area boundary (K), and
3.3) Determining this partial area boundary section (TA) as lying outside the particular other partial area (F) in the case that the number of intersection points is even or zero, and as lying inside the particular other partial area (F) in the case that the number of these intersection points is odd.

4. The method according to claim 3,
**characterized in that**
the method step 3.1) has the following method steps:
4.1) Determining whether a point of the partial area boundary (K) selected as starting point (St) of a half line lies on the particular other partial area boundary (K), and
4.2) Determining another point of the partial area boundary (K) as starting point (St) in the case that it was determined that this selected point lies on the particular other partial area boundary (K).

5. The method according to claim 3 or 4,
**characterized in that**
the partial area boundary (K) of each partial area (F) is a closed polygon or polyhedron and is given by corner points (P), in particular polygonal corner points or polyhedral corner points present in coordinate form, that are located on sides (Sg), in particular side straight lines or side surfaces of the partial area, and that the method step 3.1 has the following method step:
5.1) Determining a direction of the half line (H) in such a manner that this direction deviates in particular as greatly as possible, preferably maximally from the directions of all sides (Sg) of the partial areas (F).

6. The method according to one of the previous claims,
**characterized in that**
the method step 1.1) is preceded by the following method steps:
6.1) Determining whether the partial area boundaries (K) touch each other at at least one point of one of the partial areas (F) that is in particular not an intersection point (S) of these partial area boundaries (K) with each other, and
6.2) Shifting at least one of the partial areas (F) relative to the particular other partial area (F) in the case that it was determined that the partial area boundaries (K) touch each other at this point until these partial area boundaries (K) no longer touch each other.

7. The method according to claim 6,
**characterized in that**
the partial area boundary (K) of each partial area (F) is a closed polygon or polyhedron and is given by corner points (P), in particular polygonal corner points or polyhedral corner points present in coordinate form, that are located on sides (Sg), in particular side straight lines or side surfaces of the partial area, and that the method step 6.2) has the following method steps:
7.1) Determining a shifting vector for shifting the particular partial area (TA) [sic - "F"?] in such a manner that the direction of the shifting vector deviates from the directions of all sides (Sg) of the particular other partial area (F) preferably as far as possible, in particular maximally, and
7.2) Shifting the coordinates of the corner points (P) of the partial area (TA) [sic - "F"?] in accordance with this shifting vector.

8. The method according to one of claims 4 or 5,
**characterized in that**
the partial area boundary (K) of each partial area (F) is a closed polygon or polyhedron and is given by corner points (P), in particular polygonal corner points or polyhedral corner points present in coordinate form, that are located on sides (Sg), in particular side straight lines or side surfaces of the partial area, and that the method steps 4.1 have the following method steps:
8.1) Determining the distance of the point (St, P) to each side (Sg) comprising a partial area boundary section (TA) of the particular other partial area boundary (K), and
8.2) Determining the point (St, P) as lying on the particular other partial area boundary section (TA) and/or determining the partial area boundary section (TA) comprising this point (St, P) as touching this other partial area boundary section (TA) if the determined distance to the side straight line (Sg) comprising this other partial area boundary section (TA) is less than a given greatest interval.

9. The method according to one of claims 6 or 7,
**characterized in that**
the partial area boundary (K) of each partial area (F) is a closed polygon or polyhedron and is given by corner points (P), in particular polygonal corner points or polyhedral corner points present in coordinate form, that are located on sides (Sg), in particular side straight lines or side surfaces of the partial area, and that the method steps 4.1 and/or 6.1 have the following method steps:
9.1 Determining the distance of the point (St, P) to each side (Sg) comprising a partial area boundary section (TA) of the particular other partial area boundary (K), and
9.2) Determining the point (St, P) as lying on the particular other partial area boundary section (TA) and/or determining the partial area boundary section (TA) comprising this point (St, P) as touching this other partial area boundary section (TA) if the determined distance to the side straight line (Sg) comprising this other partial area boundary section (TA) is less than a given greatest interval.

10. The method according to one of the previous claims for the case that the corridor has two dimensions and the steps (S) are intersection points,
**characterized in that**
the method step 1.1) has the following method steps;
10.1) Determining the original coordinates of these intersection points (S) and
10.2) Sorting these original coordinates in ascending sequence in accordance with the sequence of these intersection points (S) on the particular partial area boundary (K),
and that the method step 1.2) has the following measuring step:
10.3) Determining the particular partial area boundary sections (TA) as a consequence of sections between pairs of original coordinates following each other in accordance with the sorting, whereby the end point (P) of the last partial area boundary section (TA) of the particular partial area boundary (K) is at the same time the starting point (P) of the first partial area boundary section (TA) of this partial area boundary (K) and that the end point (P) of each other partial area boundary section (TA) of this partial area boundary (K) is at the same time the starting point (P) of the particular following partial area boundary section (TA) of this partial area boundary (K).

11. The method according to one of the previous claims,
**characterized in that**
the corridor boundary (U) or a two-dimensional image of the corridor boundary (U) is graphically shown on a graphic display means, in particular a display or monitor.

12. A device for determining at least one corridor boundary (U) that determines at least one corridor (KF) in particular a sea route, that sets an in particular admissible sojourn area for a vehicle, from at least one, in particular inadmissible surrounding area, whereby the corridor (KF) comprises several partial areas (F) that overlap each other at least partially in pairs, and whereby the corridor boundary (U) comprises partial area boundary sections (TA) of partial area boundaries (K) limiting these partial areas (F),
**characterized by**
the following means for determining the corridor boundary (U):
12.1) Section determining means for determining at least one section (S), in particular at least two section points of at least one partial area boundary (K) of at least one partial area (F) with at least one other partial area boundary (K) of at least one other partial area (F),
12.2) Section determining means for determining the sections of the particular partial area boundary (K) which sections are limited by the particular section (S), in particular by the intersection points, as the particular partial area boundary sections (TA) as well as in the case that no section (S) was determined for at least one partial area boundary (K), for determining this particular partial area boundary (K) as a particular partial area boundary section (TA),
12.3) Location determining means for determining whether the particular partial area boundary sections (TA) lie outside or inside the particular other partial area (F), and
12.4) Corridor boundary determining means for determining the corridor boundary (U) from the sections lying outside of each particular other partial area (K) and which sections are of these partial area boundary sections (TA) determined to be lying outside of at least one particular other partial area (F),
and further **characterized by**
12.5 A design of the device that is such that
a) For each partial area (F) of the corridor (KF) relative to each partial area (F) of the corridor (KF), which partial area overlaps with this particular partial area (F), partial area boundary sections (TA) of the partial area boundary (K) of this particular partial area (F) that are to be rejected are calculated,
b) A change of the corridor (KF) can take place by removing at least one partial area (F) from the partial areas (F) already comprised before this change from the corridor (KF), whereby the partial area boundary sections (TA) of the partial area boundaries (K) to be rejected are not recalculated relative to partial areas (F) that continue to be comprised by the corridor (KF) after this change, and
c) The corridor boundary (U) from the partial area boundaries (K) of all partial areas (F) of the corridor (KF), which partial areas continue to be comprised by the corridor (KF) after this change, minus all section of all these partial area boundaries (K), which sections are to be rejected at least once, is obtained and displayed on a display device.

13. The device according to claim 12,
**characterized by**
means for carrying out the method steps according to one of claims 2 to 9.

14. The device according to claim 12 or 13,
**characterized by**
a graphic display means, especially a display or monitor on which the corridor boundary (U) or a two-dimensional image of the corridor boundary (7) can be graphically represented.

15. A computer program comprising computer program code means suitable for carrying out the method according to one of claims 1 to 10 if this computer program is carried out on a computer.

## Revendications

1. Procédé de détermination d'au moins une limitation de corridor (U), qui sépare au moins un corridor (KF), en particulier une voie maritime, qui définit une zone de séjour, en particulier admissible, pour un véhicule, d'au moins une zone d'environnement, en particulier non admissible, le corridor (KF) comprenant plusieurs portions (F) se chevauchant en partie réciproquement au moins par paires et la limitation de corridor (U) présentant des sections de limitation de portion (TA) de limitations de portion (K) limitant ces portions (F),
**caractérisé par**
les étapes de procédé suivantes pour définir la limitation de corridor (U) :
1.1) déterminer au moins une intersection (S), en particulier au moins deux points d'intersection, respectivement d'au moins une limitation de portion (K) d'au moins une portion (F) avec respectivement au moins une autre limitation de portion (K) d'au moins une autre portion (F),
1.2) définir les sections limitées par l'intersection (S) respective, en particulier par les points d'intersection, de la limitation de portion (K) respective comme les sections de limitation de portion (TA) respectives ainsi que, dans le cas où pour au moins une limitation de portion (K) aucune intersection (S) n'a été déterminée, définir cette limitation de portion (K) respective comme section de limitation de portion (TA) respective,
1.3) déterminer si ces sections de limitation de portion (TA) respectives se trouvent à l'extérieur ou à l'intérieur de l'autre portion (F) respective, et
1.4) définir la limitation de corridor (U) à partir des sections se trouvant à l'extérieur de chaque autre portion (F) respective de ces sections de limitation de portion (TA) déterminées comme se trouvant à l'extérieur d'au moins une autre portion (F) respective,
1.5) dans lequel
a) pour chaque portion (F) du corridor (KF), des sections de limitation de portion (TA) de la limitation de portion (K) de cette portion (F) respective à rejeter sont calculées par rapport à chaque portion (F) du corridor (KF) se chevauchant avec cette portion (F) respective,
b) une modification du corridor (KF) est effectuée en enlevant au moins une portion (F) des portions (F) déjà comprises dans le corridor (KF) avant cette modification, dans lequel les sections de limitation de portion (TA) des limitations de portion (K) à rejeter par rapport à des portions (F) qui sont toujours comprises dans le corridor (KF) après cette modification, ne sont pas recalculées, et
c) la limitation de corridor (U) est obtenue à partir des limitations de portion (K) de toutes les portions (F) du corridor (KF) toujours comprises dans le corridor (KF) après cette modification moins toutes les sections à rejeter au moins une fois de toutes ces limitations de portion (K), et est affichée sur un appareil d'affichage.

2. Procédé selon la revendication 1,
**caractérisé en ce que**
la limitation de portion (K) de chaque portion (F) ne s'entrecoupe pas respectivement elle-même et l'étape de procédé 1.3) comprend les étapes de procédé suivantes :
2.1) définir pour respectivement au moins une section de limitation de portion (TA) limitée par l'intersection (S), en particulier par les points d'intersection, si cette section de limitation de portion (TA) se trouve à l'extérieur ou à l'intérieur de l'autre portion (F) respective, et
2.2) définir d'autres, en particulier toutes les autres, sections de limitation de portion (TA) respectives limitées par l'intersection (S) à partir de cette section de limitation de portion (TA) définie comme se trouvant à l'extérieur ou à l'intérieur de l'autre portion (F) respective alternativement comme se trouvant à l'extérieur ou à l'intérieur de l'autre portion (F) respective.

3. Procédé selon la revendication 1 ou 2,
**caractérisé en ce que**
l'étape de procédé 1.3) présente les étapes de procédé suivantes :
3.1) définir une demi-droite (H) partant d'un point de départ (St) comme partie d'une droite entrecoupant une section de limitation de portion (TA) de la limitation de portion (K), le point d'intersection de cette droite avec la limitation de portion (K) étant le point de départ (St) de la demi-droite (H),
3.2) déterminer le nombre de points d'intersection de cette demi-droite (H) avec l'autre limitation de portion (K) respective et
3.3) définir cette section de limitation de portion (TA) comme se trouvant à l'extérieur de l'autre portion (F) respective dans le cas où le nombre de points d'intersection est pair ou zéro, et comme se trouvant à l'intérieur de l'autre portion (F) respective dans le cas où le nombre de ces points d'intersection est impair.

4. Procédé selon la revendication 3,
**caractérisé en ce que**
l'étape de procédé 3.1) présente les étapes de procédé suivantes :
4.1) déterminer si un point de la limitation de portion (K) sélectionné comme point de départ (St) d'une demi-droite se trouve sur l'autre limitation de portion (K) respective, et
4.2) définir un autre point de la limitation de portion (K) comme point de départ (St) dans le cas où il a été déterminé que ce point sélectionné se trouve sur l'autre limitation de portion (K) respective.

5. Procédé selon la revendication 3 ou 4,
**caractérisé en ce que**
la limitation de portion (K) de chaque portion (F) est respectivement un polygone ou un polyèdre fermé et est donnée par des sommets (P) présents sous forme de coordonnées, en particulier des sommets de polygone ou des sommets de polyèdre, qui se trouvent sur des côtés (Sg), en particulier des droites latérales ou des faces latérales, de la portion et
l'étape de procédé 3.1) présente l'étape de procédé suivante :
5.1) définir une direction de la demi-droite (H) de telle sorte que cette direction diffère, en particulier le plus fortement possible, de préférence au maximum, des directions de tous les côtés (Sg) des portions (F).

6. Procédé selon l'une des revendications précédentes,
**caractérisé en ce que**
les étapes de procédé suivantes précèdent l'étape de procédé 1.1) :
6.1) déterminer si les limitations de portion (K) se touchent en au moins un point de l'une des portions (F), qui en particulier n'est pas un point d'intersection (S) de ces limitations de portion (K) entre elles, et
6.2) déplacer au moins l'une des portions (F) par rapport à l'autre portion (F) respective dans le cas où il a été déterminé que les limitations de portion (K) se touchent en ce point, jusqu'à ce que ces limitations de portion (K) ne se touchent plus.

7. Procédé selon la revendication 6,
**caractérisé en ce que**
la limitation de portion (K) de chaque portion (F) est respectivement un polygone ou un polyèdre fermé et est donnée par des sommets (P) présents sous forme de coordonnées, en particulier des sommets de polygone ou des sommets de polyèdre, qui se trouvent sur des côtés (Sg), en particulier des droites latérales ou des faces latérales, de la portion, et
l'étape de procédé 6.2) présente les étapes de procédé suivantes :
7.1) définir un vecteur de déplacement pour déplacer la portion (TA) respective de sorte que la direction du vecteur de déplacement diffère des directions de tous les côtés (Sg) de l'autre portion (F) respective, de préférence le plus possible, en particulier au maximum, et
7.2) déplacer les coordonnées des sommets (P) de la portion (TA) conformément à ce vecteur de déplacement.

8. Procédé selon l'une des revendications 4 ou 5,
**caractérisé en ce que**
la limitation de portion (K) de chaque portion (F) est respectivement un polygone ou un polyèdre fermé et est donnée par des sommets (P) présents sous forme de coordonnées, en particulier des sommets de polygone ou des sommets de polyèdre, qui se trouvent sur des côtés (Sg), en particulier des droites latérales ou des faces latérales, de la portion, et les étapes de procédé 4.1) présentent les étapes de procédé suivantes :
8.1) définir la distance du point (St, P) à chaque côté (Sg) présentant une section de limitation de portion (TA) de l'autre limitation de portion (K) respective et
8.2) définir le point (St, P) comme se trouvant sur l'autre section de limitation de portion (TA) respective et/ou déterminer la section de limitation de portion (TA) présentant ce point (St, P) comme touchant cette autre section de limitation de portion (TA) quand la distance définie par rapport à la droite latérale (Sg) présentant cette autre section de limitation de portion (TA) est inférieure à une distance maximale prédéfinie.

9. Procédé selon l'une des revendications 6 ou 7,
**caractérisé en ce que**
la limitation de portion (K) de chaque portion (F) est respectivement un polygone ou un polyèdre fermé et est donnée par des sommets (P) présents sous forme de coordonnées, en particulier des sommets de polygone ou des sommets de polyèdre, qui se trouvent sur des côtés (Sg), en particulier des droites latérales ou des faces latérales, de la portion, et
les étapes de procédé 4.1) et/ou 6.1) présentent les étapes de procédé suivantes :
9.1) définir la distance du point (St, P) à chaque côté (Sg) présentant une section de limitation de portion (TA) de l'autre limitation de portion (K) respective et
9.2) définir le point (St, P) comme se trouvant sur l'autre section de limitation de portion (TA) respective et/ou déterminer la section de limitation de portion (TA) présentant ce point (St, P) comme touchant cette autre section de limitation de portion (TA) quand la distance définie par rapport à la droite latérale (Sg) présentant cette autre section de limitation de portion (TA) est inférieure à une distance maximale prédéfinie.

10. Procédé selon l'une des revendications précédentes pour le cas où le corridor présente deux dimensions et les intersections (S) sont des points d'intersection,
**caractérisé en ce que**
l'étape de procédé 1.1) présente les étapes de procédé suivantes :
10.1) déterminer les coordonnées de l'origine de ces points d'intersection (S) et
10.2) classer ces coordonnées de l'origine dans l'ordre ascendant conformément à la suite de ces points d'intersection (S) sur la limitation de portion (K) respective,
et l'étape de procédé 1.2) présente l'étape de procédé suivante :
10.3) définir les sections de limitation de portion (TA) respectives comme suite de sections entre des paires de coordonnées de l'origine successives conformément au classement, le point d'extrémité (P) de la dernière section de limitation de portion (TA) de la limitation de portion (K) respective étant en même temps le point de départ (P) de la première section de limitation de portion (TA) de cette limitation de portion (K) et le point d'extrémité (P) de chaque autre section de limitation de portion (TA) de cette limitation de portion (K) étant en même temps le point de départ (P) de la section de limitation de portion (TA) suivante respective de cette limitation de portion (K).

11. Procédé selon l'une des revendications précédentes,
**caractérisé en ce que**
la limitation de corridor (U) ou une image bidimensionnelle de la limitation de corridor (U) est représentée graphiquement sur un moyen d'affichage graphique, en particulier un écran ou un moniteur.

12. Dispositif de détermination d'au moins une limitation de corridor (U), qui sépare au moins un corridor (KF), en particulier une voie maritime, qui définit une zone de séjour, en particulier admissible, pour un véhicule, d'au moins une zone d'environnement, en particulier non admissible, le corridor (KF) comprenant plusieurs portions (F) se chevauchant en partie réciproquement au moins par paires et la limitation de corridor (U) présentant des sections de limitation de portion (TA) de limitations de portion (K) limitant ces portions (F),
**caractérisé par**
les moyens suivants pour définir la limitation de corridor (U) :
12.1) des moyens de détermination d'intersection pour déterminer au moins une intersection (S), en particulier au moins deux points d'intersection, respectivement d'au moins une limitation de portion (K) d'au moins une portion (F) avec respectivement au moins une autre limitation de portion (K) d'au moins une autre portion (F),
12.2) des moyens de définition de section pour définir les sections limitées par l'intersection (S) respective, en particulier par les points d'intersection, de la limitation de portion (K) respective comme les sections de limitation de portion (TA) respectives ainsi que, dans le cas où pour au moins une limitation de portion (K) aucune intersection (S) n'a été déterminée, pour définir cette limitation de portion (K) respective comme section de limitation de portion (TA) respective,
12.3) des moyens de détermination de lieu pour déterminer si les sections de limitation de portion (TA) respectives se trouvent à l'extérieur ou à l'intérieur de l'autre portion (F) respective, et
12.4) des moyens de définition de limitation de corridor pour définir la limitation de corridor (U) à partir des sections se trouvant à l'extérieur de chaque autre portion (F) respective de ces sections de limitation de portion (TA) déterminées comme se trouvant à l'extérieur d'au moins une autre portion (F) respective,
et en outre **caractérisé par**
12.5) une conception du dispositif de sorte que
a) pour chaque portion (F) du corridor (KF), des sections de limitation de portion (TA) de la limitation de portion (K) de cette portion (F) respective à rejeter sont calculées par rapport à chaque portion (F) se chevauchant avec cette portion (F) respective,
b) une modification du corridor (KF) peut être effectuée en enlevant au moins une portion (F) des portions (F) déjà comprises dans le corridor (KF) avant cette modification, dans lequel les sections de limitation de portion (TA) des limitations de portion (K) à rejeter par rapport à des portions (F) qui sont toujours comprises dans le corridor (KF) après cette modification, ne sont pas recalculées, et
c) la limitation de corridor (U) est obtenue à partir des limitations de portion (K) de toutes les portions (F) du corridor (KF) toujours comprises dans le corridor (KF) après cette modification moins toutes les sections à rejeter au moins une fois de toutes ces limitations de portion (K), et est affichée sur un appareil d'affichage.

13. Dispositif selon la revendication 12,
**caractérisé par**
des moyens pour exécuter les étapes de procédé selon l'une des revendications 2 à 9.

14. Dispositif selon la revendication 12 ou 13,
**caractérisé par**
un moyen d'affichage graphique, en particulier un écran ou un moniteur, sur lequel la limitation de corridor (U) ou une image bidimensionnelle de la limitation de corridor (U) peut être représentée graphiquement.

15. Programme informatique, qui comprend des moyens de codage de programme informatique qui sont appropriés pour l'exécution du procédé selon l'une des revendications 1 à 10 quand ce programme informatique est exécuté sur un ordinateur.
